(19) Europäisches Patentamt

European Patent Office

Office européen des brevets

(11) **EP 0 750 750 B1**

(12) **EUROPÄISCHE PATENTSCHRIFT**

(45) Veröffentlichungstag und Bekanntmachung des Hinweises auf die Patenterteilung:
**27.06.2001 Patentblatt 2001/26**

(21) Anmeldenummer: **95911146.9**

(22) Anmeldetag: **17.03.1995**

(51) Int Cl.$^7$: **G02B 5/18**

(86) Internationale Anmeldenummer:
**PCT/AT95/00051**

(87) Internationale Veröffentlichungsnummer:
**WO 95/25288 (21.09.1995 Gazette 1995/40)**

(54) **ZONENLINSE**

ZONED LENS

LENTILLE ZONEE

(84) Benannte Vertragsstaaten:
**AT BE CH DE ES FR GB IE IT LI NL SE**

(30) Priorität: **17.03.1994 AT 56994**

(43) Veröffentlichungstag der Anmeldung:
**02.01.1997 Patentblatt 1997/01**

(73) Patentinhaber: **BIFOCON OPTICS FORSCHUNGS- UND ENTWICKLUNGS GMBH 1010 Wien (AT)**

(72) Erfinder: **FIALA, Werner A-1180 Wien (AT)**

(74) Vertreter: **Torggler, Paul Norbert, Dr. et al Patentanwälte Torggler & Hofinger Wilhelm-Greil-Strasse 16 Postfach 556 6021 Innsbruck (AT)**

(56) Entgegenhaltungen:
**EP-A- 0 367 878          EP-A- 0 375 152
DE-A- 4 130 092          US-A- 4 775 229**

- **PATENT ABSTRACTS OF JAPAN vol. 006 no. 265 (P-165), 24.Dezember 1982 & JP,A,57 161721 (NIPPON DENSHIN DENWA KOSHA) 5.Oktober 1982,**
- **PATENT ABSTRACTS OF JAPAN vol. 011 no. 291 (P-618), 19.September 1987 & JP,A,62 085229 (NIPPON KOGAKU KK) 18.April 1987,**

EP 0 750 750 B1

**Beschreibung**

Die Erfindung betrifft eine Zonenlinse entsprechend dem Oberbegriff des Anspruchs 1.

Unter Linsen werden hier allgemein sowohl refraktive Linsen als auch diffraktive Linsen (z.B. Fresnel'sche Zonenplatten) verstanden. Auch einem mit einem feinen Loch versehenen Diaphragma können, wie in der Figurenbeschreibung ausgeführt wird, effektive Brechkräfte zugeordnet werden. Es werden daher hier auch optische Elemente mit nominaler Brechkraft Null aber beschränkter Apertur, wie beispielsweise kreisförmige oder kreisringförmige Platte mit paralleler Vorder- und Hinterflächen als "Linsen" verstanden.

Verschiedene Zonen einer Linse stellen durch physikalische Eigenschaften unterscheidbare Bereiche einer Linse dar, wobei sich die physikalischen Eigenschaften zwischen den Zonen in einem verhältnismäßig kleinen Bereich sehr rasch bzw. sprungartig ändern. Insbesondere begrenzen stufenartige Sprünge der Dicke des verwendeten Linsenmaterials, also beispielsweise Stufen auf der Vorder- oder Rückfläche der Linse, verschiedene Zonen einer Linse. Auch die Verwendung von verschiedenen Linsenmaterialien in verschiedenen Bereichen der Linse führt zu einer Zonenlinse im hier verwendeten Sinn.

Aus der US-PS 4,804,249 ist ein optischer Filter bekannt, bei dem Interferenzen zwischen den einzelnen Zonen durch ausreichend hohe Stufen zwischen diesen Zonen unterbunden werden. Dadurch soll bei der Verwendung dieser Einrichtung mit einer Linse die Tiefenschärfe dieser Linse vergrößert werden.

Bekannt sind weiters Fresnel-Linsen. Eine derartige Fresnel-Linse ist beispielsweise in der US-PS 4,787,722 beschrieben. Fresnel-Linsen weisen konzentrische Linsenzonen auf, die durch Stufen getrennt sind, um die Dicke der Linse auf ein Minimum zu reduzieren.

Aufgabe der Erfindung ist es, eine Zonenlinse mit verbesserten optischen Eigenschaften bereitzustellen. Erfindungsgemäß gelingt dies durch die Merkmale des Anspruchs 1. Mit der vorliegenden Erfindung gelingt es, Linsen mit relativ großer Apertur herzustellen, die die Tiefenschärfe bzw. optischen Charakteristika von Linsen sehr kleiner Apertur besitzen. Dieser Effekt wird weder durch die in der US-PS 4,804,249 beschriebenen Filterplatte noch durch herkömmliche Fresnel-Linsen erreicht.

Befinden sich in den verschiedenen Zonen optische Materialien mit verschiedenen Brechungsindexes, so kann für eine solche Ausgestaltung günstigerweise vorgesehen sein, daß zwei beliebige achsparallele Strahlen durch zwei benachbarte Zonen optische Weglängen innerhalb der Linse durchlaufen, die sich um mindestens die Kohärenzlänge unterscheiden. Bestehen benachbarte Zonen aus dem gleichen Linsenmaterial, so sollen die optischen Weglängen zweier beliebiger achsparalleler Strahlen durch die zwei benachbarten Zonen um mindestens den Betrag $KL * n_c/(n_c - n_i)$

verschieden sein, wobei KL die Kohärenzlänge des verwendeten Lichts, $n_c$ der Brechungsindex des Linsenmaterials und $n_i$ der Brechungsindex des die Linse umgebenden Mediums sind. Für die Werte $n_c = 1.5$ und $n_i = 1$ ergibt sich dieser Betrag beispielsweise zu $3^*KL$. Diese Bedingung wird erfüllt, wenn beispielsweise zwischen den Zonen Stufen vorgesehen sind, deren Höhe durch $KL/(n_c - n_i)$ gegeben ist. mit den gewählten Werten für $n_c$ und $n_i$ und einer Kohärenzlänge von beispielsweise 2 Mikrometern ergibt sich eine Stufenhöhe von 4 Mikrometern.

In dem Fall, daß die Differenzen der optischen Weglängen der Lichtstrahlen, welche durch benachbarte Zonen der Linse verlaufen, zwischen einem Objektpunkt und einen Bildpunkt mindestens gleich der Kohärenzlänge des verwendeten Lichts sind, kommt es zu keinen Interferenzen der durch die benachbarten Zonen verlaufenden Lichtstrahlen, wie in der Figurenbeschreibung noch genauer ausgeführt werden wird, wodurch sich in verschiedenen Anwendungen Vorteile gegenüber herkömmlichen Linsen erzielen lassen. Beispielsweise können bei bifokalen Linsen störende Interferenzen zwischen den Bereichen mit unterschiedlichen Brennweiten ausgeschaltet werden.

Werden die Stufen so ausgeführt, daß die optischen Weglängendifferenzen der Lichtstrahlen durch benachbarte Zonen zwischen einem Objektpunkt und einem Bildpunkt zwar kleiner als die Kohärenzlänge, mindestens jedoch gleich der halben Kohärenzlänge des verwendeten Lichts sind, so werden die Interferenzen der durch benachbarte Zonen verlaufenden Lichtstrahlen zwar reduziert, aber nicht vollständig unterdrückt, was für gewisse Anwendungsfälle ausreichend sein mag. Zonenlinsen mit solchen reduzierten Stufen stellen daher ebenfalls erfindungsgemäße Gegenstände dar.

In einer Ausführungsform der Erfindung ist vorgesehen, daß benachbarte Zonen der Linse eine unterschiedliche Dicke aufweisen, wobei zwischen den Zonen Stufen vorgesehen sind. Dabei soll die Stufenhöhe zwischen benachbarten Zonen der Linse mindestens $|\lambda^2/(\Delta\lambda(n_c - n_i))|$ betragen, wobei $\lambda$ die mittlere Wellenlänge des verwendeten Lichts, $\Delta\lambda$ die Halbwertbreite der Wellenlängenverteilung des verwendeten Lichts $n_c$ den Brechungsindex des Linsenmaterials und $n_i$ den Brechungsindex des an die Linse angrenzenden Mediums bezeichnen. Die Kohärenzlänge ist gegeben durch $KL = \lambda^2/\Delta\lambda$. Bei Verwendung von sichtbarem Licht mit einer Kohärenzlänge im Bereich von ca. 1-10 um soll dann die Stufenhöhe gemessen in Mikrometern zwischen benachbarten Zonen der Linse mindestens $5/|(n_c - n_i)|$ betragen, wobei $n_c$ den Brechungsindex des Linsenmaterials und $n_i$ den Brechungsindex des an die Linse angrenzenden Mediums bezeichnen. Günstigerweise wird eine Stufenhöhe von mindestens 3 Mikrometern vorzugsweise mindestens 10 Mikrometern vorgesehen. Da die üblichen Linsenmaterialien einen Brechungsindex von ca. 1,5 aufweisen und da das von mit "weißem" Licht angestrahlten Gegenständen reemittierte Licht Kohärenzlängen aufweist, die normalerweise im Bereich von 3 µm, kaum jedoch über 5 µm liegen, können mit einer solchen Stufenhöhe Interferenzen zwischen den verschiedenen Zonen wirkungsvoll unterdrückt werden.

Um Streulicht von den seitlichen Stufenflächen zwischen den Zonen auszuschließen, ist bei dieser Ausführungsform der Erfindung günstigerweise vorgesehen, die seitlichen Flächen der Stufen zwischen den Zonen mit einem lichtabsorbierenden Material zu versehen.

Die optische Weglänge eines Lichtstrahls von einem Objektpunkt durch die Linse bis zu einem zu diesem Objektpunkt gehörenden konjugierten Bildpunkt setzt sich zusammen aus den beiden Beiträgen außerhalb der Linse und dem Beitrag innerhalb der Linse. Mit den oben angeführten Vorkehrungen wird erreicht, daß sich die optischen Weglängen von Lichtstrahlen durch zwei benachbarte Zonen um mindestens die Kohärenzlänge unterscheiden. Gibt es - wie im Falle von multifokalen Linsen - mehrere zu einem Objektpunkt konjugierte Bildpunkte, so sind die optischen Weglängen durch benachbarte Zonen zwischen dem Objektpunkt und jeweils demselben Bildpunkt zu messen. Jeder der vorhandenen konjugierten Bildpunkte, welche dabei reel oder virtuell sein können, kann dazu verwendet werden.

Die Bestimmung eines zu einem bestimmten Objektpunkt gehörigen konjugierten Bildpunktes ist bekannter Stand der Technik. Beispielhafte Vorgangsweisen dazu werden aber in der Figurenbeschreibung nochmals kurz erläutert.

Weitere Vorteile und Einzelheiten der Erfindung werden im folgenden anhand der beiliegenden Zeichnung erläutert.

In dieser zeigen:

Fig. 1a und 1b      schematische Darstellungen der Öffnungswinkel von strahlenden Flächen,

Fig. 2      eine Verteilung der effektiven Brechkraft einer Linse,

Fig. 3      die Abhängigkeit der Halbwertbreite der Verteilung der effektiven Brechkraft von der Linsenapertur,

Fig. 4      die Abhängigkeit der auf die Wellenlänge des Lichts normierten Halbwertbreite der effektiven Brechkraft von der Linsenfläche,

Fig. 5      Verteilungen von effektiven Brechkräften bei verschiedenen Linsenaperturen,

Fig. 6      einen Vergleich der Interferenzmuster einer Kreisfläche mit einer flächengleichen Kreisringfläche,

Fig. 7      Remissionsspektren verschiedener Gegenstände,

Fig. 8a      eine Ausführungsform der Erfindung,

Fig. 8b      eine zweite Ausführungsform der Erfindung,

Fig. 9      eine dritte Ausführungsform der Erfindung,

Fig.10      eine erfindungsgemäße Kontaktlinse,

Fig.11      eine Hilfszeichnung zur Konstruktion einer Linse,

Fig.12      die Verteilung der effektiven Brechkräfte einer erfindungsgemäßen Linse im Vergleich mit einer konventionellen Linse mit einer zehnmal kleineren Fläche,

     Verteilungen der effektiven Brechkräfte von Bifokallinsen ohne und mit Interferenz zwischen den Zonen,

Fig.14      eine Verteilung der effektiven Brechkraft einer Linse aus doppelbrechendem Material,

Fig.15      eine weitere Ausführungsform der Erfindung,

Fig.16      einen Vergleich der effektiven Brechkräfte einer konventionellen Linse mit der eines Systems bestehend aus einer konventionellen Linse und einer erfindungsgemäßen Linse,

Fig.17 bis 20      weitere Ausführungsformen der Erfindung,

Fig.21      einen Vergleich der effektiven Brechkräfte verschiedener konventioneller und erfindungsgemäßer refraktiver bifokaler Zonenlinsen,

Fig.22      die Abhängigkeit der optischen Weglängen vom Abstand der Strahlen vom Linsenmittelpunkt für den zur Brechkraft von -5 Diptrien gehörenden Bildpunkt,

Fig.23      eine weitere Ausführungsform der Erfindung,

Fig.24      die Abhängigkeit der optischen Weglängendifferenzen vom Abstand der Strahlen vom Linsenmittelpunkt bei einer konventionellen refraktiven bifokalen Zonenlinse,

Fig.25      die Abhängigkeit der optischen Weglänge vom Abstand der Strahlen vom Linsenmittelpunkt einer erfindungsgemäßen bifokalen Zonenlinse bei einer effektiven Brechkraft von 3,75 Dioptrien.

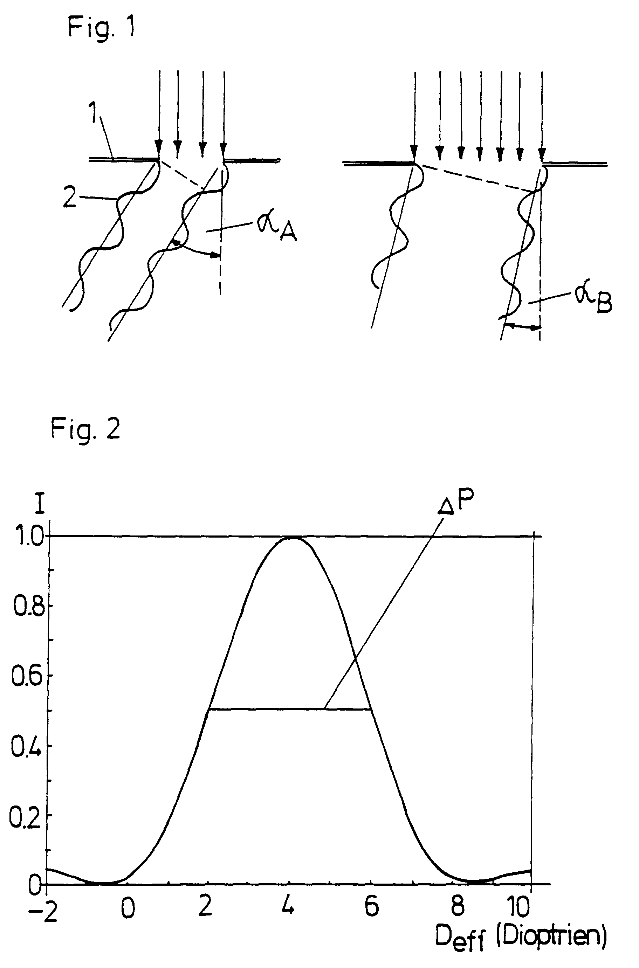

Bekanntlich ist der Öffnungswinkel der von einer strahlenden Fläche abgegebenen Strahlung umso größer je kleiner die strahlende Fläche ist. Diese physikalische Tatsache kann anhand von Interferenzbetrachtungen erklärt werden: Fig. 1a zeigt schematisch eine kleine Fläche 1, die z.B. kohärentes Licht 2 emittiert, wobei alle ausgesandten Teilwellen am Ort der Emission identische Phase haben mögen. Der Öffnungswinkel $\alpha_{A'}$ bei dem erstmals destruktive Interferenz zwischen den Randstrahlen bzw. -wellen auftritt, ist größer als der Winkel $\alpha_B$ bei den analogen Verhältnissen der Fig. lb. Aus diesen Gegebenheiten ist auch unmittelbar abzuleiten, daß z.B. eine Linse kleiner Apertur eine größere Tiefenschärfe aufweist als eine Linse größerer Apertur.

Eine praktische Anwendung dieser Gegebenheit stellt die sogenannte stenopäische Brille dar: Gemäß z.B.Graefe-Saemisch: Handbuch der gesamten Augenheilkunde, Verlag von Wilhelm Engelmann, Leipzig 1910, Seite 178 werden als stenopäische Brillen "alle jene Vorrichtungen bezeichnet, bei welchen eine größere Schärfe des Netzhautbildes nicht durch Änderung des Strahlenganges" (Anm.: refraktionsoptische Vorrichtungen) "herbeigeführt wird, sondern dadurch, daß man die Größe der Zerstreuungskreise durch passende Blenden möglichst zu verringern sucht, also durch Beschränkung des einfallenden Strahlbündels. Die einfachste Form solcher Brillen ist ein mit einem feinen Loch versehenes Diaphragma".

Die Nachteile solcher stenopäischer Brillen sind im wesentlichen in der Herabsetzung der Lichtstärke und in der Einschränkung des Gesichtsfeldes zu sehen; weiters verringert sich allgemein mit zunehmender Tiefenschärfe das Auflösungsvermögen bzw. der Kontrast von optischen Vorrichtungen. Bei verschiedenen optischen Anwendungen ist aber die Verringerung des Kontrastes bzw. Auflösungsvermögens akzeptabel.

Der Nachteil des eingeengten Gesichtsfeldes kann durch Heranführung des Lochs an das Auge gemindert werden, d.h. durch Ausführung der "Brille" als Kontaktlinse (bzw. als Intraokularlinse). Dem Nachteil der verminderten Lichtintensität wird gelegentlich dadurch begegnet, daß mehrere Löcher nebeneinander angebracht werden (s.Graefe-Saemisch, loc.cit.). Bei nebeneinanderliegenden Löchern kommt es aber zu Interferenzen zwischen den Lichtwellen aus den verschiedenen Löchern, was sich nachteilig auf die Abbildungsqualität auswirkt.

Mit der gegenständlichen Erfindung kann eine strahlende Fläche so gestaltet werden, daß jeder einzelne Teilbereich dieser Fläche praktisch unbeeinflußt von den übrigen Teilbereichen dieser Fläche Strahlung emittiert, daß also die Interferenzmuster hinter den einzelnen Teilbereichen unabhängig voneinander existieren und somit die von verschiedenen Teilbereichen kommenden Wellenzüge nicht interferieren. Dadurch kann z.B. die Lichtstärke von stenopäischen Brillen bzw. Linsen erheblich erhöht werden, ohne die aus der Beschränkung der einfallenden Strahlenbüschel auf sehr kleine Aperturen sich ergebenden optischen Vorteile zu vermindern. Weiters können mit der vorliegenden Erfindung Linsen relativ großer Apertur hergestellt werden, die die Tiefenschärfe von Linsen sehr kleiner Apertur besitzen, dabei aber wesentlich größere Lichtintensitäten durchlassen als die entsprechenden Linsen kleiner Apertur. Weiters können mit der vorliegenden Erfindung Vorrichtungen geschaffen werden, mit denen konventionelle Linsen großer Apertur die optischen Charakteristika von Linsen kleiner Apertur verliehen werden können. Solche "stenopäischen Linsen" großer Apertur bzw. Lichtstärke können in optischen Geräten und optischen und ophthalmischen Vorrichtungen vielfältig verwendet werden. Beispielsweise können damit ophthalmische Sehbehelfe hergestellt werden, die zur Korrektur der Alterssichtigkeit und/oder zur Korrektur des Astigmatismus dienen. Weiters ist es mit der vorliegenden Erfindung möglich, bi- oder multifokale Zonenlinsen herzustellen, bei denen Interferenzen zwischen den einzelnen Zonen unterdrückt werden. Es ist auch möglich, bi- oder multifokale Linsen herzustellen, bei denen ausschließlich Zonen gleicher nomineller Brechkraft interferieren können. Schließlich ist es mit der vorliegenden Erfindung möglich, Fresnel'sche Zonenplatten herzustellen, die gegenüber herkömmlichen Fresnel'schen Zonenplatten eine im wesentlichen verdoppelte Lichtausbeute aufweisen.

In Fig. 2 ist die Verteilung der effektiven Brechkraft einer Linse von 1 mm Durchmesser und nominell 4 Dioptrien dargestellt, das heißt es ist die Intensität des Lichts 2 gegen die effektive Brechkraft $D_{eff}$ aufgetragen. Wie ersichtlich, stellt diese Linse wegen ihrer kleinen Apertur von 1 mm ein breites Spektrum von effektiven Brechkräften bei. Als Maß für die Verteilungsbreite der Brechkraft wird die Halbwertbreite $\Delta P$ der Verteilung genommen,; für die in Fig. 2 ausgewertete Linse beträgt die Halbwertbreite (für eine Lichtwellenlänge von 560 mm) ca. 4 Dioptrien.

Die Berechnung der Verteilung der effektiven Brechkräfte einer Linse - wie sie z.B. in Fig. 2 dargestellt ist - kann auf verschiedene Weisen erfolgen. Im folgenden seien zwei Methoden kurz beschrieben:

Methode 1:

Von einem Objektpunkt O, der sich auf der Linsenachse g Meter vor der Linsenvorderfläche befindet, werden j Verbindungsstrahlen zu j auf der Vorderfläche der Linse gleichverteilten Punkten gezogen. Von jedem der j Punkte auf der Vorderfläche werden sodann k Verbindungslinien zu k gleichverteilten Punkten auf der Hinterfläche der Linse gezogen. (Bei numerischer Auswertung ist es sinnvoll, die j bzw. k Punkte in einem orthogonalen Netz aufzuspannen.) Sodann werden die k Punkte auf der Hinterfläche mit einem Bildpunkt B verbunden, der sich auf der Linsenachse b Meter hinter der Linse befindet (g und b können auch negative Werte annehmen.

Damit gibt es insgesamt j*k Wellenzüge, die den Objektpunkt O mit dem Bildpunkt B verbinden. Für jeden dieser j*k Wellenzüge werden dann die optischen Weglängen $L_{jk}$ zwischen O und B bestimmt. Die resultierende Amplitude im Bildpunkt B ergibt sich dann zu

$$A_{res} = \text{Const.} \ (\Sigma \ \sin\phi_{jk} + \Sigma\cos\phi_{jk}) \ ; \ \phi_{jk} = (L_{jk}/\lambda)2\Pi \ ,$$

wobei $\lambda$ die Wellenlänge des Lichts ist. Die Summenbildung ist über alle j und k zu erstrecken. Die in B resultierende Intensität ist dann $A_{res}^2$.

Die zugehörige "effektive Brechkraft" $D_{eff}$ ist weiters gegeben durch

$$D_{eff} = 1/g + 1/b$$

Verteilungskurven, wie die in Fig. 2 gezeigte, erhält man dann durch Veränderung von g oder b; man kann auch beide Werte g und b gleichzeitig variieren.

Methode 2:

Wie in Methode 1 verbindet man einen Objektpunkt O mit j gleichverteilten Punkten auf der Vorderfläche der Linse. Diese Verbindungslinien stellen dann j Lichtstrahlen dar, für die man das Brechungsgesetz anwendet, um die j gebrochenen Lichtstrahlen innerhalb der Linse zu erhalten. Die gebrochenen j Lichtstrahlen treffen in j Punkten auf die Hinterfläche der Linse auf; nun wird jeder dieser j Punkte der Hinterfläche mit dem Punkt B verbunden. Damit erhält man j Wellenzüge zwischen den Punkten O und B und somit Lj verschiedene optische Weglängen der j Wellenzüge. Die resultierende Amplitude in B ist dann gegeben durch

$$A'_{res} = \text{Konst}^*(\Sigma\sin\phi_j + \Sigma\cos\phi_j) \qquad \text{mit} \ \phi_j = (L_j/\lambda)^*2\pi$$

Die Summenbildung ist nun über alle j Wellenzüge zu erstrecken.

Die beiden Methoden führen zum praktisch gleichen Ergebnis, wenn über genügend viele Strahlen bzw. Punkte aufsummiert wird. Da bei der Methode 2 der Rechenaufwand wesentlich geringer ist, ist diese Methode zu bevorzugen. Auch die weiter unten angeführte Kennzeichnung von Linsen wird auf der Grundlage der Methode 2 erfolgen. Zur Ermittlung verschiedener effektiver Brechkräfte $D_{eff}$ kann weiters der Bildabstand b konstant gehalten und nur der Gegenstandsabstand g variiert werden, wodurch der 1/r-Abfall der Amplitude nicht explizit berücksichtigt werden muß.

Bezüglich der oben angeführten Formel für die effektive Brechkraft $D_{eff}$ ist zu bemerken, daß eine gegebene Objektweite $g_k$ mit der konjugierten Bildweite $b_k$ (beziehungsweise eine gegebene Bildweite $b_k$ mit der konjugierten Objektweite gk) näherungsweise wie folgt

zusammenhängt.

$$D = 1/g_k + 1/b_k$$

wobei D die nominelle Brechkraft der Linse ist. Diese Näherung ist für dünne Linsen, bei denen die beiden Hauptebenen praktisch zusammenfallen, zutreffend. Weiters gelten diese Beziehungen nur für Linsen in Luft bzw. Vakuum. Setzt man die konjugierten Werte $g_k$ und $b_k$ in die Beziehung für die effektive Brechkraft $D_{eff}$ ein, so erhält man damit nur für dünne Linsen in Vakuum die <u>nominelle</u> Brechkraft der Linse. Für andere Fälle stellt die obige Beziehung ($D_{eff} = 1/g + 1/b$) eine Definition einer "effektiven" Brechkraft $D_{eff}$ dar.

Befindet sich vor der Linse ein Medium mit dem Brechungsindex $n_v$ und hinter der Linse ein Medium mit dem Brechungsindex $n_h$, so sind die konjugierten Objekt-bzw. Bildweiten mithilfe der Berechnung des Strahlenganges durch die Linse zu bestimmen. Dabei sind die Ablenkungen der Strahlen an den brechenden Linsenflächen mittels des Snell'schen Brechungsgesetzes zu berechnen. Im Falle von sphärisch gekrümmten Linsenflächen und kleinen Linsenaperturen kann man dabei die fundamentale Beziehung

$$n_1/a + n_2/b = (n_2 - n_1)/r$$

verwenden, wobei $n_1$ der Brechungsindex vor und $n_2$ der Brechungsindex hinter der brechenden Fläche mit dem Kugelradius r sind, und wobei a und b die entlang einer Normalen auf die brechende Fläche gemessenen Abstände vor und hinter der brechenden Fläche sind. In jedem Falle lassen sich die konjugierten Objekt- und Bildweiten für einen von einem Objektpunkt ausgehenden Lichtstrahl bestimmen; weiters kann mithilfe der hier angeführten - und bekannten - Überlegungen eine Linse oder Linsenzone so gestaltet werden, daß alle vom Objektpunkt stammenden Lichtstrahlen in denselben konjugierten Bildpunkt gebrochen werden, siehe unten.

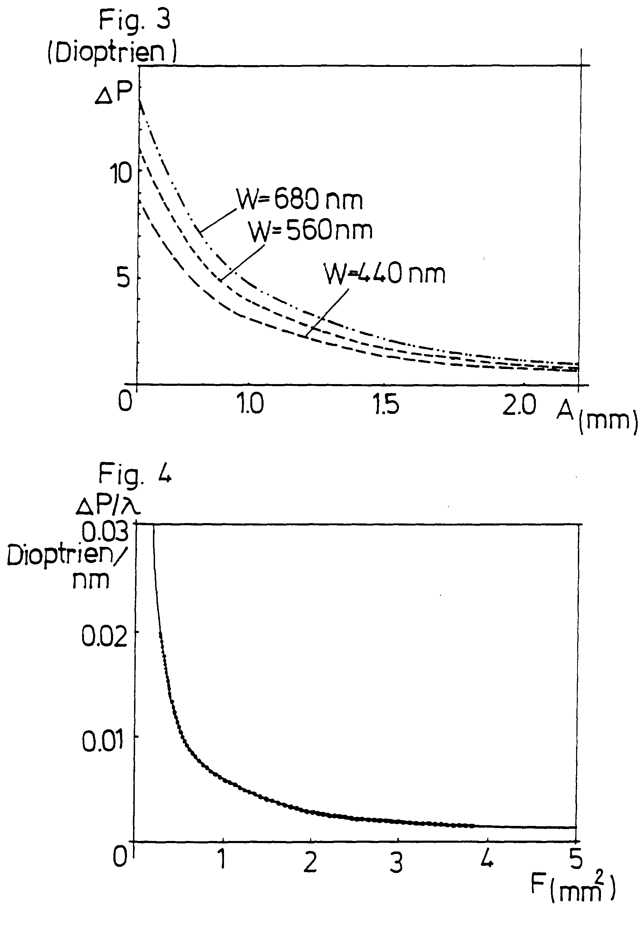

Die Abhängigkeit der $\Delta P$ gemäß der Verteilung der effektiven Brechkraft von der Linsenapertur A (und der Wellenlänge) ist in Fig. 3 dargestellt. Angemerkt wird, daß diese Halbwertbreite unabhängig von der nominellen Brechkraft der Linse ist.

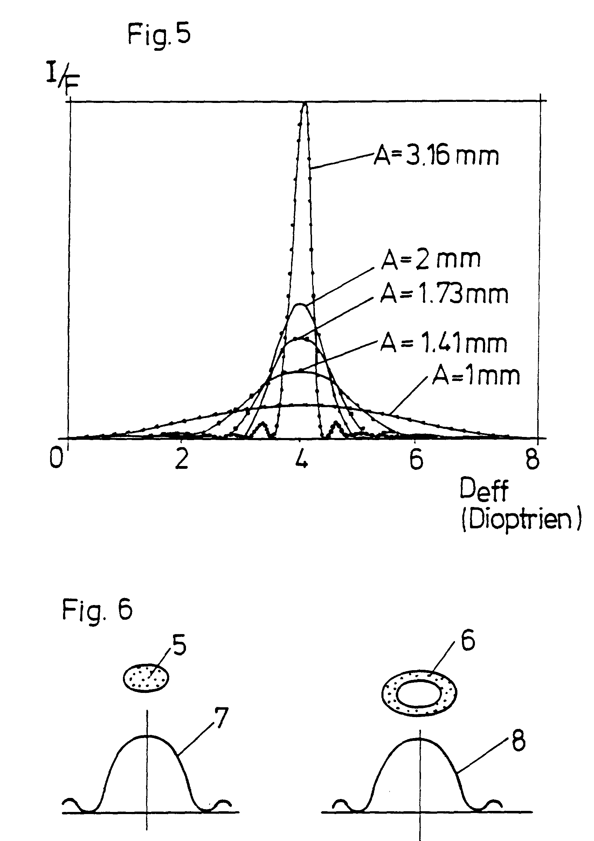

Fig. 4 kann aus den Ergebnissen der Fig. 3 hergeleitet werden. Wie ersichtlich, kann die Halbwertbreite $\Delta P$ der Brechkraftverteilung in guter Näherung durch die in Fig. 4 als durchgezogene Linie dargestellte Funktion

$$\Delta P = \lambda * 0.0056/F$$

angegeben werden, wobei $\Delta P$ die Halbwertbreite in Dioptrien, $\lambda$ die Wellenlänge in nm und F die strahlende

Linsenfläche in mm$^2$ ist.

Die Abnahme der Halbwertbreite mit zunehmender Linsenfläche ist aus den Ergebnissen der Fig. 5 zu sehen, in der die auf die Linsenfläche F normierte Intensität I des Lichts gegen diese effektive Brechkraft $D_{eff}$ für eine Linse mit einer nominellen Brechkraft von vier Dioptrien aufgetragen ist. Die Linse mit einer Apertur A von 3.16 = √10 mm hat eine zehnmal größere Fläche als jene von 1 mm Durchmesser, entsprechend kleiner ist die Halbwertbreite (und damit die Tiefenschärfe) der größeren Linse.

Für das Verständnis der gegenständlichen Erfindung ist nun wesentlich, daß das in Fig. 6 abgebildete Interferenzmuster (7) hinter einer kreisförmigen strahlenden Fläche 5 dem Interferenzmuster (8) hinter einer zu dieser kreisförmigen Fläche konzentrischen Kreisringfläche 6 ist, wenn die Flächeninhalte der Kreisfläche 5 und der Kreisringfläche 6 identisch sind; dieses Ergebnis ist unmittelbar z.B. aus der Theorie der Fresnel'schen Zonenplatte abzuleiten.

Zur Intensitätsvervielfachung wird nun die Kreisfläche mit einer an sich beliebig großen Anzahl von konzentrischen Kreisringflächen umgeben. Um die optischen Eigenschaften strahlender Flächen kleinen Flächeninhalts zu erhalten, muß bei einem System solcher kleiner Flächen aber die Interferenz der Wellen aus den einzelnen kleinen Flächen unterbunden werden. Die Interferenz von Wellen aus verschiedenen Teilbereichen einer strahlenden Fläche kann nun dadurch unterbunden werden, daß die Teilbereiche so ausgestaltet werden, daß sich die optischen Weglängen der Wellen aus verschiedenen Teilbereichen um mindestens die Kohärenzlänge des emittierten (bzw. re-emittierten) Lichtes unterscheiden; dabei werden die optischen Weglängen vom Ort der Lichtemission bis zum untersuchten Ort der Interferenz bzw. Nicht-Interferenz gemessen (Bildpunkt bzw. potentieller Bildpunkt).

Wie in Standardwerken (z.B. Bergmann-Schäfer, Optik, S.331 ff, Max Born, Optik, Berlin-Heidelberg, New York 1972, S.111) dargelegt wird, kommen zwei Lichtwellen praktisch nur dann zur Interferenz, wenn deren optische Weglängendifferenz kleiner ist als die Kohärenzlänge K.L. = $\lambda^2/\Delta\lambda$, wobei $\lambda$ die mittlere Wellenlänge und $\Delta\lambda$ die Halbwertbreite der Wellenlängenverteilung des von der Lichtquelle ausgesandten Spektrums ist. Die Kohärenzlänge von "weißem Licht" beträgt (s.Bergman-Schäfer loc.cit.S.333) ca. 1 $\mu$m; diesen Wert erhält man unmittelbar durch Einsetzen von $\lambda$ =550 nm und $\Delta\lambda$ = 300 nm (weißes Licht umfaßt einen Wellenlängenbereich von ca. 400 bis 700 nm).

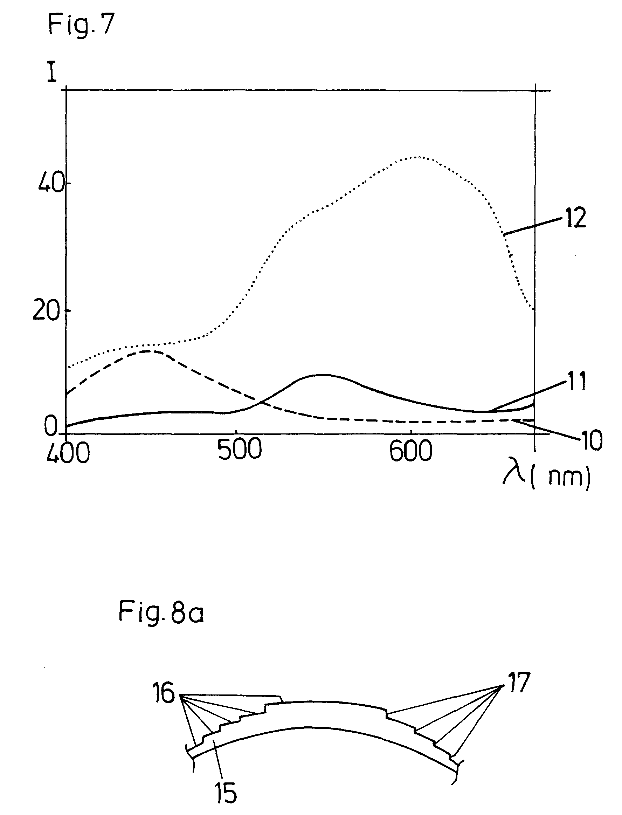

Bei optischen und ophthalmischen Anwendungen gilt es in der Regel, Licht, das von Gegenständen re-emittiert wird, zu verarbeiten. In Fig. 7 sind Re-emissionsspektren von blauem Autolack 10, vom Blatt eines Rosenstrauchs 11 und von einem gelben Apfel gezeigt. Die Kohärenzlängen von diesen Gegenständen liegen bei 2 $\mu$m, 3,6 $\mu$m und 2,3 $\mu$m. Aus diesen Ergebnissen kann geschlossen werden, daß die Kohärenzlängen des von Gegenständen emittierten sichtbaren Lichtes kaum Werte von ca. 5 - 10 $\mu$m übersteigt (Laserlicht, das in einem extrem schmalen Wellenlängenbereich emittiert wird, besitzt demgegenüber Kohärenzlängen von vielen Metern).

Um nun z.B. die einzelnen Zonen einer Linse so zu gestalten, daß die Lichtwellen durch die verschiedenen Zonen hinter der Linse nicht interferieren, genügt es, die Zonen so auszugestalten, daß die optischen Weglängen der mit den Lichtwellen assoziierten Lichtstrahlen durch die verschiedenen Zonen Unterschiede von mindestens der Kohärenzlänge aufweisen. Solche Zonenlinsen bzw. optische Vorrichtungen werden in Zukunft "kohärenzlängenkorrigiert" genannt.

In Fig. 8a ist. eine mögliche Ausführungsform dargestellt. Die Linse 15 ist so geformt, daß jede ihrer Zonen 16 eine nominell gleiche Brechkraft aufweist (die nominelle Brechkraft ist dann jene Brechkraft, bei der die Verteilungskurve für die effektive Brechkraft das Maximum hat; siehe Fig. 2). Die Krümmungen der Vorder- bzw. Hinterfläche der Zonen 16 können dabei anhand bekannter Linsenformeln berechnet werden. Weiters können die Zonen 16 so ausgeführt sein, daß die optischen Weglängen aller Strahlen durch eine gegebene Zone 16, gemessen von einem Objektpunkt durch die Zone 16 hindurch bis zum der nominellen Brechkraft entsprechenden konjugierten Bildpunkt (im Falle von negativen Linsen bzw. Zone 16 ist der Bildpunkt virtuell), genau gleich sind (für solche Linsen bzw. Linsenzonen wird gelegentlich der Ausdruck "aplanatisch" verwendet). Die einzelnen Zonen 16 der Linse sind nun aber verschieden dick, so daß an den Grenzen zwischen den Zonen Stufen 17 entstehen. Die Höhen der einzelnen Stufen 17 zwischen den Zonen 16 müssen nun mindestens K.L./($n_1$-$n_i$) betragen, wobei $n_i$ der Brechungsindex des an die Linse 15 angrenzenden Mediums und $n_1$ der Brechungsindex des Linsenmaterials ist, damit die Unterschiede der optischen Weglängen der mit den Strahlen durch die verschiedenen Zonen 16 assoziierten Wellen größer als die Kohärenzlänge des verarbeiteten Lichts sind. Stellt die Linsenachse z.B. die z-Achse eines Koordinatensystems dar, so ist die Höhe der Stufen 17 der Absolutbetrag der Differenz zwischen der größten z-Koordinate der Vorder- oder Hinterfläche der einen Zone 16 und der kleinsten z-Koordinate der Vorder- oder Hinterfläche der an diese Zone 16 angrenzenden Zone 16.

Die Stufen können, wie bereits angeführt, natürlich entweder an der Vorderfläche oder der Hinterfläche der Linse angebracht sein, auch Ausführungen, bei denen beide Linsenflächen Stufen aufweisen, sind möglich. Um Streulicht von den seitlichen Flächen der Stufen 17 zu vermeiden, können diese mit einem lichtabsorbierenden Material bedeckt werden. Die Stufen zwischen benachbarten Zonen können auch schräg und/oder gekrümmt ausgeführt sein, sodaß benachbarte Zonen nicht durch Zylindermäntel sondern durch Kegelstumpfmäntel bzw. tonnenförmige Mäntel verbunden sind. Solche Mantelflächen können dann selbst als ringförmige Linsen geringer anteiliger Fläche und sehr großer absoluter Brechkraft angesehen werden. Der (geringe) Anteil des auf die Mantelflächen fallenden Lichts im Vergleich zum insgesamt auf die Linse fallenden Lichts wird dann von diesen Mantelflächen sehr stark gebrochen und tritt als Hintergrundintensität auf. Diese Bereiche sollen aber in diesem Zusammenhang nicht als "Zonen" der erfindungsgemäßen Zonenlinse angesehen werden, sondern nur als Übergangsbereiche zwischen benachbarten Zonen. Weiters kann es sinnvoll sein, auch solche Mantelflächen mit einer lichtabsorbierenden Schicht zu bedecken.

Eine Linse gemäß Fig. 8a kann z.B. als Kontaktlinse ausgebildet sein. In den letzten Jahren wurden auch Methoden entwickelt, refraktive Fehler des Auges durch entsprechende Ablation der Cornea selbst mittels eines Lasers (Excimer-Laser) zu korrigieren. Wegen der im Prinzip großen erreichbaren Genauigkeit bei der Abtragung cornealer Schichten mittels Laser ergibt sich die Möglichkeit, eine entsprechende Kohärenzlängenkorrektur auch direkt auf der Oberfläche der Cornea anzubringen. Der Brechungsindex $n_i$ ist dann jener der Cornea (ca. 1.37).

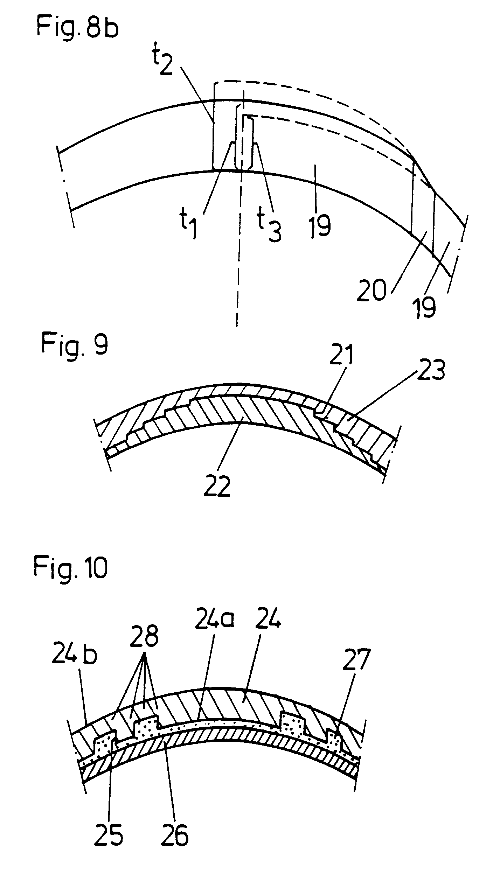

Sind bei einer Linse Stufen an der Vorder- oder Hinterfläche nicht erwünscht, so können die erwünschten optischen Weglängenunterschiede auch durch Verwendung von Materialien mit verschiedenen Brechungsindizes in den einzelnen Linsenzonen erzeugt werden. Fig. 8b stellt schematisch eine solche Linse dar: Es wechseln Zonen 19 (nur zwei davon sind in Fig. 8b dargestellt), in denen ein Material mit einem Brechungsindex $n_g$ verwendet wird, mit Zonen 20 ab, welche ein Material mit einem Brechungsindex $n_k$ aufweisen (nur eine dargestellt), wobei $n_g > n_k$ ist. Für den Fall, daß alle Zonen 19,20 gleiche nominelle Brechkraft besitzen, sind nun die Krümmungen benachbarter Zonen 19,20 verschieden. Damit können die zu den einzelnen Zonen gehörigen theoretischen Mittendicken $t_1, t_2, t_3, ...$ gebildet werden. In guter Näherung sind dann die Unterschiede der optischen Weglängen für Strahlen durch die einzelnen Zonen (gemessen für die nominelle Brechkraft) gegeben durch

$$\Delta L_{12} = t_1{}^*(n_g - 1) - t_2{}^*(n_k - 1)$$

wobei $\Delta L_{12}$ die optische Weglängendifferenz zwischen den Strahlen durch die Zone 1 und durch die Zone 2 ist. In analoger Weise erhält man

$$\Delta L_{13} = t_1{}^*(n_g - 1) - t_3{}^*(n_g - 1)$$

Allgemein ist die Differenz $\Delta L_{1m}$ der optischen Weglängen zwischen einer Zone 1 und einer Zone m gegeben durch

$$\Delta L_{1m} = t_1{}^*(n_l - 1) - t_m{}^*(n_m - 1)$$

wobei $t_1$ und $t_m$ die zu den Zonen 1 und m gehörigen Mittendicken sind, und $n_1$ und $n_m$ die Brechungsindizes in den Zonen 1 und m. Den Beziehungen ist zu entnehmen, daß es durch entsprechende Wahl der Parameter (Brechungsindizes, Linsendicke) möglich ist, die Differenz der optischen Weglängen von Strahlen durch beliebige zwei Zonen größer als die Kohärenzlänge des verwendeten Lichts zu machen.

Im Falle von z.B. Kontaktlinsen kann eine stufenförmige Oberfläche zu Einbußen des Tragekomforts führen. Eine Kohärenzlängenkorrektur ist aber auch bei Linsen mit beidseitig glatten, d.h. stetigen Oberflächen möglich. Fig. 9 zeigt eine mögliche Ausführungsform. Die Stufenhöhen 21 bei dieser Ausführungsform sind nun mindestens K.L./($n_1$-$n_2$) groß, wobei K.L. die größte Kohärenzlänge des zu verarbeitenden Lichtes und $n_1$ und $n_2$ die Brechungsindizes der beiden Linsenmaterialien 22,23 sind. Die einzelnen Linsenzonen weisen wiederum nominell gleiche Brechkraft auf.

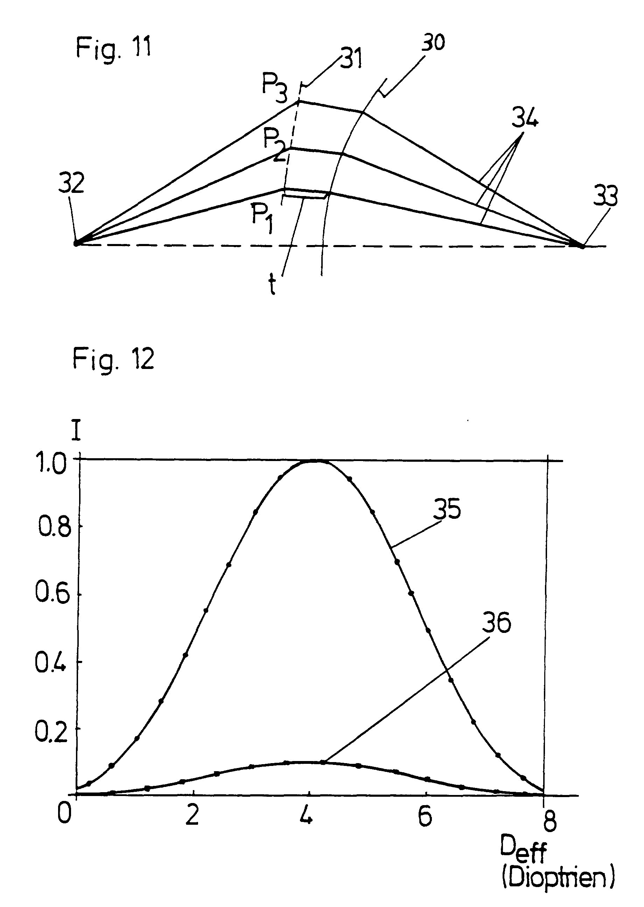

Eine weitere mögliche Ausführungsform z.B. einer Kontaktlinse 24 ist in Fig. 10 gezeigt. Hier sind die Stufen 25 an der Rückfläche 24a der Linse 24 so ausgebildet, daß etwa 50% der Rückfläche 24a der Cornea 26 angepaßt werden können, wodurch guter Tragekomfort zu erzielen ist. Die Hälfte der Zonen 28 weist Vertiefungen auf, die sich mit Tränenflüssigkeit 27 füllen. Es ist nun möglich, eine stetige und stückweise differentiierbare - also eine im wesentlichen glatte - Vorderfläche 24b so zu gestalten, daß die Unterschiede der optischen Weglängen zweier durch verschiedene Zonen 28 gehenden Strahlen mindestens größer als die Kohärenzlänge des betrachteten Lichts ist. Diese Möglichkeit beruht auf folgender Gegebenheit (Fig. 11); Wenn eine Fläche, z.B. die Rückfläche 30 einer Linse oder Linsenzone gegeben ist (die Rückfläche ist rotations-symmetrisch aber nicht notwendigerweise sphärisch), so können bei gegebener Anfangsdicke t Punkte $P_1, P_2, P_3,...$ der Vorderfläche 31 so berechnet werden, daß die Linse oder Linsenzone eine einheitliche Brechkraft besitzt bzw. "aplanatisch" ist. Die Verbindung aller $P_i$ stellt dann die Vorderfläche 31 dar. Die Strahlen 34 gehen dabei von einem Objektpunkt 32 aus und laufen zu einem Bildpunkt 33. Analoge Überlegungen gelten bei vorgegebener Vorderfläche, wobei, wie im Falle der Linse gemäß Fig. 10, auch der Einfluß der Tränenflüssigkeitszonenlinse zu berücksichtigen ist.

Fig. 12 zeigt die Intensität I des Lichtes in Abhängigkeit von der effektiven Brechkraft $D_{eff}$, wobei in Kurve 35 der Intensitätsverlauf einer in 10 kohärenzlängenkorrigierte Zonen unterteilte Linse mit einer Apertur von 3,16 mm dargestellt ist. Wie ersichtlich ist, weist eine solche Linse bei 10-facher durchgelassener Lichtleistung eine Intensitätsverteilung der effektiven Brechkraft auf, die jener einer zehnmal kleineren Linse mit nur einer Zone und einer Apertur von 1 mm (Kurve 36) entspricht. Werden die Zonen der Linse nicht kohärenzlängenkorrigiert, so ergibt sich demgegenüber eine Verteilung der effektiven Brechkraft gemäß Fig. 5.

Bezüglich der mit den einzelnen effektien Brechkräften einhergehenden Intensität ist zu sagen, daß die Kohärenzlängenkorrektur nicht zu einer Erhöhung der gesamten durch die Linse durchgelassenen Lichtleistung führen kann, d.h. daß unabhängig von der Zonenstruktur unmittelbar hinter der Linse integral die gleiche Lichtleistung gemessen würde. Die Gestaltung der Zonen beeinflußt somit die örtliche Verteilung der gesamten Lichtleistung, aber nicht die transmittierte Lichtleistung selbst.

Die Anforderungen bei der Fertigung solcher Linsen sind etwas geringer als jene, die bei der Fertigung von konventionellen Diffraktionslinsen (siehe z.B. US 4,340,283, US 4,637,697) bestehen. Denn während bei Diffraktionslinsen die Höhe der Stufen auf ca. 1/10 Wellenlängen bzw. ca. 50 nm genau ausgeführt sein muß (siehe z.B. Stanley A. Klein und Zhuo-Yan Ho, "Multizone Bifocal Contact Lens Design, SPIE, Vol.679, p.25, Aug.86), ist bei kohärenzlängenkorrigierten Zonenlinsen lediglich gefordert, daß die Stufen einen gewissen Mindestwert (einige µm) überschreiten müssen.

Wie ersichtlich, besitzt eine Linse gemäß Fig. 12 eine Halbwertbreite der Intensitätsverteilung von ca. 4 Dioptrien. Eine solche Linse eignet sich daher z.B. zur Korrektur der Alterssichtigkeit eines Hyperopen mit großer benötigter Fernaddition. Aufgrund des Intensitätsverlaufs dieser Linse funktioniert diese Linse am besten für die Mitteldistanz. Wie bereits erwähnt, ist die Halbwertbreite der Intensitätsverteilung von der nominellen Linsenbrechkraft unabhängig, woraus folgt, daß solche Linsen bei Emmetropen, Hyperopen und Myopen eingesetzt werden können.

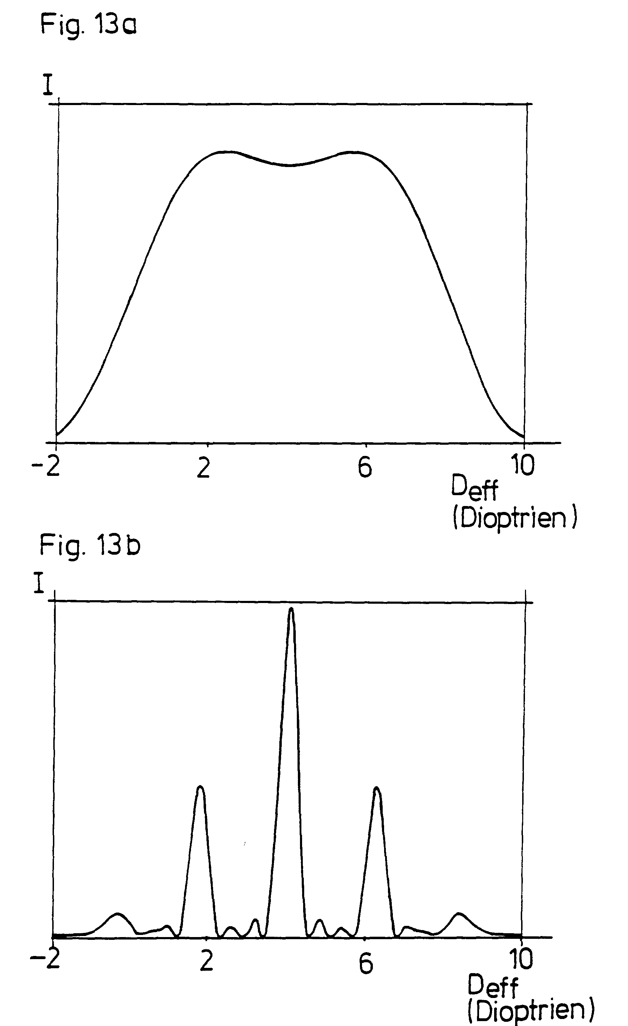

Ist die Bevorzugung der Mitteldistanz bei einer Kohärenzlängenkorrigierten Linse nicht erwünscht, so bietet sich die Möglichkeit, den Zonen einer solchen Linse z.B. abwechselnd verschiedene nominelle Brechkräfte zu geben. Fig. 13a zeigt die Abhängigkeit der Intensität I des Lichts von der effektiven Brechkraft $D_{eff}$ bei einer solchen Bifokallinse, bei der jeweils 5 Zonen (Flächeninhalt jeweils $\pi/4$ mm$^2$) eine nominelle Brechkraft von 2 bzw. 6 Dioptrien gegeben wird. Eine solche Linse stellt beispielsweise eine annähernd konstante Intensität von ca. 1 bis 7 Dioptrien zur Verfügung. Sind vergleichsweise die Zonen dieser Linse nicht kohärenzlängenkorrigiert, so ergibt sich die in Fig. 13b gezeichnete Verteilung der effektiven Brechkraft. Eine solche Linse wäre also trifokal, wobei die mittlere Brechkraft auf Interferenz von Lichtwellen aus den verschiedenen Zonen zurückzuführen ist. Ein ähnliches Ergebnis erhielten Klein und Ho (SPIE, loc.cit.) für eine bifokale refraktive Zweizonenlinse. Anzumerken ist, daß sogenannte refraktive Bifokallinsen z.B. gemäß US-PS 5,106,180 und PCT/JP92/01730 nicht kohärenzlängenkorrigierte Linsen darstellen, bei denen Interferenz zwischen Zonen verschiedener refraktiver Brechkraft zu beobachten ist.

Die Zonen einer Linse mit abwechselnd verschiedenen Brechkräften können, was sofort einzusehen ist, aus Material mit identischem Brechungsindex oder aus verschiedenen Materialien mit verschiedenen Brechungsindizes gefertigt werden. Werden den Zonen verschiedene Brechungsindizes gegeben, so ist es möglich, beide Linsenoberflächen stetig bzw. glatt auszugestalten, wie den obigen Erläuterungen (Fig. 8b) zu entnehmen ist. Wird für die Linse nur ein einziges optisches Material verwendet, so sind zwischen benachbarten Zonen Stufen vorzusehen; da die Stufenhöhen i.a. aber nur einige Mikrometer betragen, ist es auch bei den Stufenlinsen möglich, die Stufenfläche annähernd glatt auszubilden, d.h. anstelle der Stufen Übergangsbereiche zu schaffen. Solche Übergangsbereiche entstehen praktisch zwingend bei der Fertigung solcher Linsen z. B. mittels Drehen, da die Drehwerkzeuge keinen unendlich kleinen Radius besitzen.

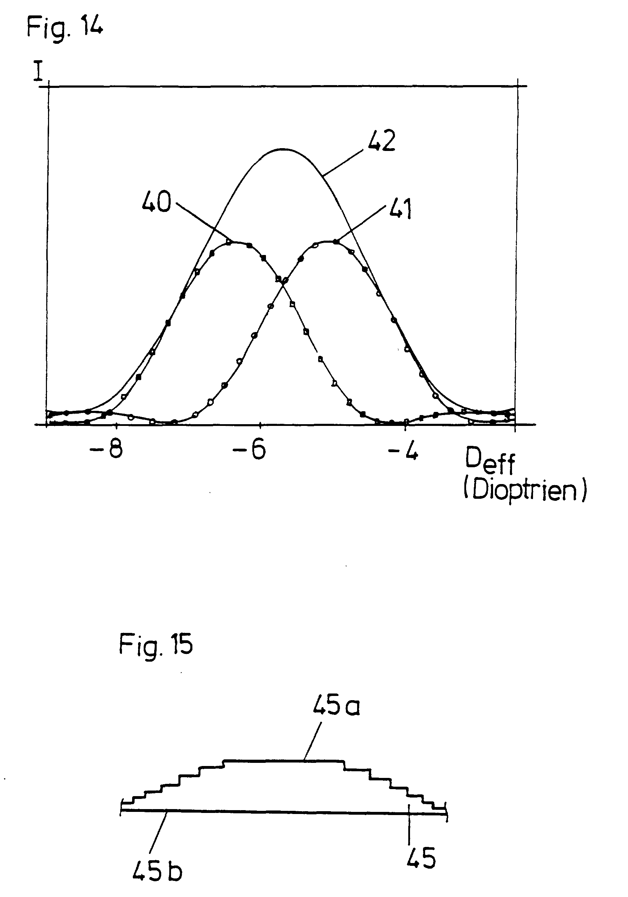

Eine weitere Möglichkeit, die Verteilung der effektiven Brechkraft zu verbreitern, besteht darin, eine kohärenzlängenkorrigierte Linse aus doppelbrechendem Material zu fertigen. Fig. 14 zeigt die Abhängigkeit der Intensität I des Lichts von der effektiven Brechkraft $D_{eff}$ einer Linse mit 4,5 mm Durchmesser, die in 10 Zonen gleichen Flächeninhalts unterteilt ist, wobei die Zonen kohärenzlängenkorrigiert sind. Die Linse wird aus einem doppelbrechenden Material gefertigt, dessen Brechungsindizes 1.51 (für die ordentlichen Strahlen) und 1.66 (für die außerordentlichen Strahlen) betragen. In Kurve 40 ist die Intensität der außerordentlichen Strahlen, in Kurve 41 die Intensität der ordentlichen Strahlen und in Kurve 42 die Gesamtintensität eingetragen. Die einzelnen Zonen interferieren nicht, da sie kohärenzlängenkorrigiert sind, die ordentlichen und die außerordentlichen Strahlen interferieren nicht, weil bekanntlich zueinander orthogonal polarisierte Wellen nicht interferieren (s.z.B. Max Born, loc.cit.S.113). Eine solche Linse kann z.B. zur Korrektur der Alterssichtigkeit eines Myopen von ca. -7 D Fernaddition verwendet werden. Es ist bekannt, daß durch Verwendung eines Polarisationsfilters in Verbindung mit doppelbrechenden Bifokallinsen wahlweise die eine oder andere Brechkraft unterdrückt werden kann (s.z.B. US-PS 5,142,411).

Mit einem astigmatischen Auge kann bekanntlich in einem großen Entfernungsbereich scharf gesehen werden, wenn durch ein Loch kleiner Apertur geschaut wird. Der Nachteil eines solchen Sehbehelfs ist hauptsächlich in der durch das Loch durchtretenden geringen Lichtintensität zu sehen. Wie gezeigt wurde, kann diese Lichtintensität erheblich erhöht werden, indem man anstelle des Loches kohärenzlängenkorrigierte Zonenlinsen verwendet. Dabei kann diese Zonen-"linse" durchaus auch die nominelle Brechkraft Null besitzen.

Sind Einbußen des Kontrastes bzw. des Auflösungsvermögens bei einer solchen Korrektur des Astigmatismus nicht erwünscht, so kann man Zonen größerer Fläche verwenden, die aber nicht als Kreisringe, sondern als "Ellipsenringe" ausgebildet sind. Während bei kreisringförmigen Zonen die beiden die Zone begrenzenden Radien der m-ten Zone durch $r_m$-1 = Konst.* $\sqrt{(m-1)}$ und $r_m$ = Konst.* $\sqrt{m}$ gegeben sind, gilt bei ellipsenförmigen Zonen ein analoges Bildungsgesetz für die beiden Achsen der Ellipsen. Stehen die großen Achsen der Ellipsen z.B. vertikal, so weist die Linse in horizontaler Richtung eine breitere Verteilung der effektiven Brechkraft auf als in vertikaler Richtung (siehe z.B. Max Born, loc.cit.S.161); damit ist ein entsprechender Astigmatismus bis zu einigen Dioptrien Zylinder korrigierbar. Eine Linse mit elliptischen Diffraktionszonen aber ohne Kohärenzlängenkorrektur wird zur Korrektur des Astigmatismus in der US-PS 5,016,977 vorgeschlagen.

Eine "Zonenlinse" 45 mit der Brechkraft Null ist schematisch in Fig. 15 gezeigt. Im gezeigten Beispiel sind die Begrenzungsflächen (45a, 45b) plan, weshalb diese Vorrichtung als Stufenplatte bezeichnet wird. Eine analoge Ausführung kann Zonen mit im wesentlichen gleichen vorderen und hinteren Krümmungsradien haben. Der Einfachheit wird auch eine solchen Ausführung "Stufenplatte" genannt.

Aus dem bisher gesagten ist sofort abzuleiten, daß eine weitere Ausführungsform einer solchen Stufenplatte darin bestehen kann, daß man in den einzelnen Zonen optische Materialien verwendet, die verschiedene Brechungsindizes aufweisen.

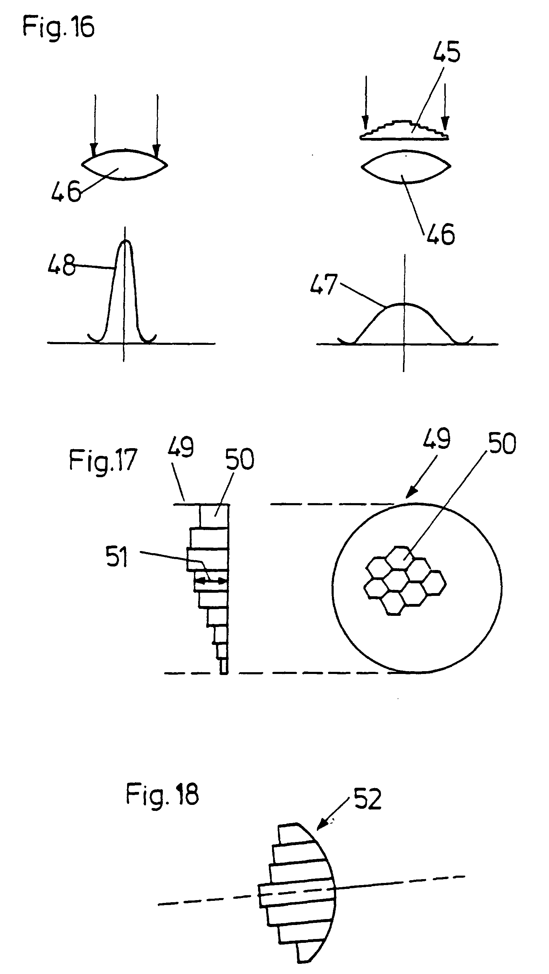

Eine Stufenplatte der genannten Art dient nun im wesentlichen dazu, die optischen Weglängen der durch die einzelnen Zonen durchtretenden Wellen bzw. Strahlen derart zu verändern, daß diese Wellen nicht mehr zur Interferenz kommen können. Wenn eine solche Stufenplatte 45 in Verbindung mit einer konventionellen Linse 46, (vgl. Fig. 16) verwendet wird, so entspricht das optische Verhalten der Kombination jenem der oben diskutierten kohärenzlängenkorrigierten Stufenlinse mit nur einer nominellen Brechkraft. Ein solches System hat eine größere Halbwertbreite der Verteilung 47 der effektiven Brechkraft als die entsprechende Verteilung 48 der konventionellen Linse 46 allein.

Prinzipiell bietet sich die Möglichkeit, eine Stufenplatte in den Strahlengang optischer Geräte ggf. vorübergehend einzubringen, wenn z.B. die Tiefenschärfe des Gerätes erhöht werden soll, beispielsweise bei einem Mikroskop, um das Objekt schneller zu finden.

Eine weitere Ausführungsform einer Stufenplatte 49 mit der nominellen Brechkraft Null ist schematisch in Fig. 17 dargestellt. Hier besitzen die einzelnen Zonen 50 z.B. Sechseckquerschnitt. Die Zonen sind so ausgebildet, daß sich jede Höhe 51 jeder Zone 50 um mindestens den Betrag K.L./($n_z$-$n_u$) von den Höhen sämtlicher anderer Zonen 50 unterscheidet. K.L. bezeichnet dabei die Kohärenzlänge des verwendeten Lichts, $n_z$ den Brechungsindex des Linsenmaterials und $n_u$ den Brechungsindex des an die Linsen angrenzenden Mediums. Auf diese Weise ist wiederum gewährleistet, daß die durch verschiedene Zonen 50 durchtretenden Lichtwellen nicht zur Interferenz kommen können.

Wird eine Stufenplatte gemäß Fig. 17 in Verbindung mit einer konventionellen Linse verwendet, so erhält man eine wesentlich engere Verteilungskurve für die effektive Brechkraft einer solchen Kombination als bei analoger Verwendung einer Stufenplatte gemäß Fig. 15, wenn man, wie bisher, die Intensitätsverteilung entlang der Linsenachse betrachtet. Betrachtet man hingegen die Intensitätsverteilung entlang der Verbindungslinie zwischen dem der nominellen Brechkraft entsprechenden Brennpunkt und dem Mittelpunkt der Zone, so erhält man bei zur Linsenachse parallelem Lichteinfall wiederum eine Intensitätsverteilung, deren Halbwertbreite der Fläche der Zone entspricht (siehe Fig. 4). Jedenfalls kann auch eine solche Anordnung z.B. zur Erhöhung der Tiefenschärfe der Linse oder eines Linsensystems bzw. optischen Gerätes beitragen.

Angeführt wird, daß Vorrichtungen zur Umwandlung von kohärentem in inkohärentes bzw. nichtinterferierendes Licht, die oben Stufenplatte genannt wurde, auch andere Querschnitte der Zonen aufweisen können als Kreis, Kreisring oder Sechseck.

Selbstverständlich ist es möglich, eine Stufenplatte gemäß Fig. 17 und eine refraktive Linse in einem Stück zu kombinieren; bei der Gestaltung der Oberflächen der Zonen ist dann entsprechend der weiter oben angeführten Methode vorzugehen. Fig. 18 zeigt schematisch eine Linse 52, die kohärenzlängenkorrigierte Zonen gleicher Querschnittsform aufweist.

Bei den weiter oben diskutierten kohärenzlängenkorrigierten Zonenlinsen mit konzentrischen kreisringförmigen Zonen wurde davon ausgegangen, daß die Zonenflächen gleichen Inhalt haben (Fresnel'sche Zonenform). Es ist aber auch möglich, z.B. Zonen mit von innen nach außen zunehmendem Flächeninhalt zu verwenden. Dann verringert sich mit zunehmender Apertur der Linse bzw. zunehmender Pupillengröße die Tiefenschärfe bei gleichzeitiger Erhöhung des Kontrastes. Werden die einzelnen Zonen so ausgebildet, daß sie z.B. abwechselnd zwei verschiedene nominelle Brechkräfte aufweisen, so wird die Linse mit zunehmender Apertur zunehmend bifokal mit zunehmend deutlich voneinander abgegrenzen Brechkräften. Theoretisch ist auch das umgekehrte Verhalten zu erreichen, indem man die Flächeninhalte der Zonen von innen nach außen zunehmend kleiner macht.

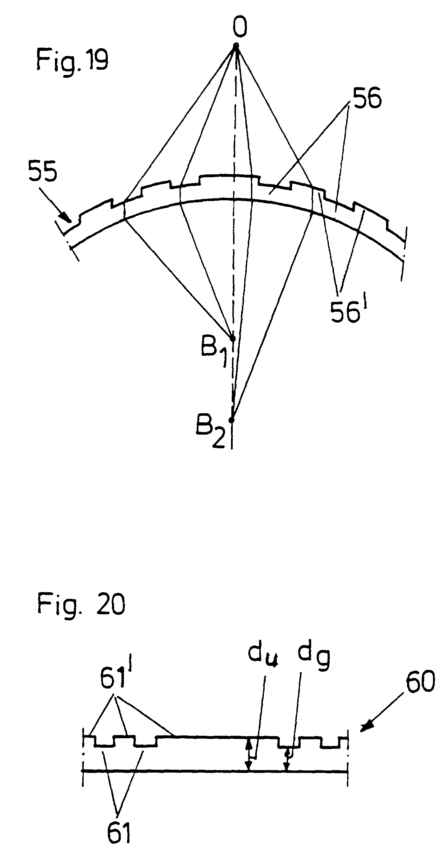

Wie erwähnt, kommt es bei den konventionellen refraktiven bifokalen Zonenlinsen zu Interferenzen zwischen Zonen verschiedener nomineller Brechkraft. Sind nun solche Interferenzen unerwünscht, so bietet sich die Möglichkeit, die einzelnen Zonen interferenzmäßig zu entkoppeln, indem man Stufen zwischen den benachbarten Zonen vorsieht. Fig. 19 zeigt eine mögliche Ausführungsform. Eine solche Zonenlinse 55 weist zwei Typen von Zonen 56,56' auf, die sich in ihrer nominellen Brechkraft voneinander unterscheiden. Die Linse 55 ist dabei so konstruiert, daß die optischen Weglängen durch die Zonen (56 bzw. 56') gleicher nomineller Brechkraft für die Strahlen vom Objektpunkt zum entsprechenden konjugierten Bildpunkt ($B_1$ bzw. $B_2$) alle gleich sind. Um nun Fresnel'sche Interferenzen nach Möglichkeit zu vermeiden, ist es angebracht, die Flächen der Zonen gleicher Brechkraft ungleich zu machen. Solche Linsen stellen dann angenähert tatsächlich "refraktive" bifokale Zonenlinsen dar, d.h. daß die Interferenzen zwischen Zonen verschiedener refraktiver Brechkraft unterdrückt werden.

Bekanntlich können Fresnel'sche Zonenplatten dazu verwendet werden, elektromagnetische Wellen (in der ersten Interferenzordnung) zu fokussieren. Bei konventionellen Fresnel'schen Zonenplatten sind die Zonen abwechselnd transparent und opak ausgebildet, was zu einem Lichtintensitätsverlust von 50% (in der betrachteten Interferenzordnung) führt. In Fig. 20 ist nun eine erfindungsgemäße Modifikation der Fresnel'schen Zonenplatte dargestellt, bei der ein solcher Lichtverlust nicht auftritt. Die Zonen 61,61' dieser Zonenlinse 60 sind so ausgebildet, daß die Zonen 61,61' abwechselnde Dicke $d_g$ und eine Dicke $d_u$ aufweisen. Die Dicken sind so gewählt, daß $(d_u - d_g)^* (n_1 - n_2) >$ K.L. gilt, wobei K.L. die Kohärenzlänge der zu fokussierenden elektromagnetischen Strahlung, $n_1$ der Brechungsindex des Linsenmaterials und $n_2$ der Brechungsindex der Umgebung ist. Die beiden Typen von Zonen (61,61') stellen dann jeweils voneinander unabhängige Fresnel'sche Zonenplatten dar. Die Lichtausbeute einer solchen Zonenplatte 60 erhöht sich damit gegenüber einer konventionellen Zonenplatte um den Faktor 2.

Den einzelnen Zonen solcher modifizierter Zonenplatten können nun auch verschiedene nominelle Brechkräfte gegeben werden, wodurch die Zonenplatte bzw. Zonenlinse bifokal wird. In Weiterführung des Konzeptes könnte eine solche Zonenlinse auch multifokal ausgebildet werden. Im Falle von bifokalen Zonenlinsen der vorgestellten Art wird in die jeweils nullte Interferenzordnung eine Hauptintensität gelenkt, und in die ±1., ±2.,... Ordnung weiteres Licht mit stark abnehmender Intensität.

Aus dem bisher gesagten ist unmittelbar abzuleiten, daß anstelle eines einzigen optischen Materials auch verschiedene optische Materialien in den einzelnen Zonen verwendet werden können. Die Stufenausbildung einer der Oberflächen der Zonenplatte kann dann entfallen. Es können aber auch - wie im übrigen bei allen bisher besprochenen Linsen - Materialien verschiedener Brechungsindizes mit Stufenzonen kombiniert werden.

Zusammenfassend kann gesagt werden, daß die Zonenplatten bzw. Zonenlinsen aus isotropen optischen Materialien mit konzentrischen kreisringförmigen Zonen wie folgt eingeteilt werden könen:

Kriterium I: Geometrische Verhältnisse der Zonenflächen.

I.1    Fresnel'sche Zonen: Zonen besitzen gleich große Flächen.

I.2    Beliebige Flächeninhalte der einzelnen Zonen

Kriterium II: Art der Kohärenzlängenkorrektur:

II.A    Keine Korrektur (= konventionelle Zonenlinsen)

II.B    Gleiche optische Weglängen in Zonen gleicher nomineller Brechkraft

II.C    Optische Weglängen in verschiedenen Zonen um mindestens die Kohärenzlänge verschieden.

Kriterium III: nominelle Brechkräfte der Zonen

III.a    Alle Zonen gleiche Brechkräfte

III.b    Verschiedene Brechkräfte in verschiedenen Zonen

Die jeweiligen Alternativen der drei Kriterien können beliebig miteinander kombiniert werden, um bestimmte optische Vorrichtungen zu erhalten. Wird beim Kriterium II die Möglichkeit A gewählt, so gelangt man zu bekannten konventionellen Linsen, die erfindungsgemäßen Möglichkeiten II.B und II.C führen dagegen zu neuartigen Linsen. So stellt die Kombination I.1 $^*$ II.C $^*$ III.a eine Linse dar, wie sie der Fig. 12 entspricht; konventionelle refraktive Zonenlinsen z.B. gemäß US-PS 5,106,180, US-PS 4,704,016, US-PS 4,795,462 oder PCT/JP92/01730 entsprechen der Kombination I.2 $^*$ II. A $^*$ III.b.

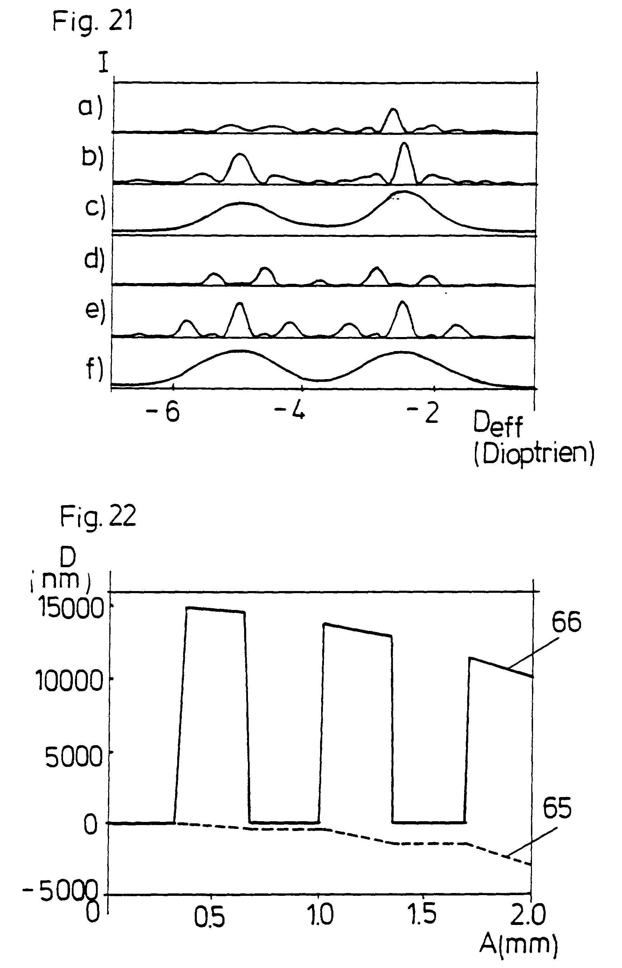

In Fig. 21 sind nun die Verteilungen der effektiven Brechkraft von verschiedenen bifokalen Linsen gegenübergestellt. Fig. 21a zeigt dabei die Verteilung einer konventionellen bifokalen Zonenlinse, im folgenden Linse A genannt, bei der alle Zonen 0,33 mm breit sind, Fig. 21b die Verteilung einer erfindungsgemäßen bifokalen Zonenlinse (Linse B), bei der nur Interferenzen zwischen Zonen gleicher Brechkraft auftreten, Fig. 21c die entsprechende Verteilung, wenn alle Zonen unabhängig (kohärenzlängenkorrigiert) sind (Linse C). Die entsprechenden Verteilungen für flächengleiche Zonen der Linsen sind in den Fig. 21d-f dargestellt, wobei Fig. 21d wiederum einer konventionellen Linse (Linse D) mit stetigen Übergängen zwischen den Zonen und die Figuren 21e und 21f erfindungsgemäßen Linsen entsprechen, in den in Fig. 21e (Linse E) nur Interferenzen zwischen Zonen gleicher Brechkraft und in Fig. 21f (Linse F) keine Interferenzen zwischen den Zonen auftreten. Wie zu sehen ist, sind die konventionellen refraktiven Zonenlinsen (Linsen A und D) den jeweiligen kohärenzlängenkorrigierten Ausführungen (Linsen B,C,E und F) unterlegen. Die sehr breiten Intensitätsverteilungen der Linsen C und F sind darauf zurückzuführen, daß die voneinander unabhängigen Zonen sehr kleine Flächen besitzen. Ist höherer Kontrast erwünscht, so kann die Anzahl der Zonen verringert bzw. die Fläche der Zonen erhöht werden. Auffällig ist das praktische Fehlen der Brechkraft von -5 D bei der Linse A im Vergleich zur Linse B. Diese Gegebenheit wird sofort aus einem Vergleich der optischen Weglängen (für den zur Brechkraft von -5D gehörenden Bildpunkt) der durch die einzelnen Zonen gehenden Strahlen verständlich (s.Fig.22): Die optische Weglängendifferenz zwischen allen Strahlen durch die Linse A (Kurve 65) beträgt lediglich ca. 2,8 µm, weshalb es im Bildpunkt der Brechkraft von -5D zu verschiedensten - offensichtlich vorwiegend destruktiven - Interferenzen kommt. Bei der kohärenzlängenkorrigierten Linse B (Kurve 66) kommt es hingegen ausschließlich zu konstruktiver Interferenz aller Strahlen der Zonen mit -5D Brechkraft, die Strahlen aus den anderen Zonen mit -2.5D haben um mindestens 10 µm größere optische Weglängen, und interferieren deshalb nicht mit den Strahlen aus den Zonen mit -5D.

Es wird ausdrücklich darauf hingewiesen, daß die konstruktiven Interferenzen in den Maxima der effektiven Brechkräfte bei allen kohärenzlängenkorrigierten refraktiven Zonenlinsen immer in der nullten Ordnung stattfinden; aus diesem Grund weisen solche Linsen praktisch keine chromatische Aberration auf, wie sie bei diffraktiven Bifokallinsen gegeben ist. Hingewiesen wird darauf, daß auch konventionelle refraktive Zonenlinsen eine sehr erhebliche Abhängigkeit der Brechkraftverteilung von der Wellenlänge des Lichtes besitzen, da es stets zu wellenlängenabhängigen Interferenzen zwischen den einzelnen Zonen kommt (siehe Fig. 22).

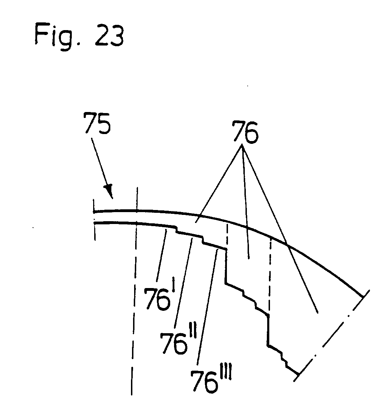

In den bisherigen Ausführungen wurde stets davon ausgegangen, daß die nominellen Brechkräfte der einzelnen Zonen refraktive Brechkräfte sind, d.h. daß diese Brechkräfte mit den Methoden der geometrischen Optik bestimmt werden können. Die gegenständliche Erfindung erstreckt sich aber auch auf Zonenlinsen, bei denen die einzelnen jeweils zueinander kohärenzlängenkorrigierten Zonen diffraktive Brechkräfte aufweisen. Fig. 23 zeigt schematisch eine solche kohärenzlängenkorrigierte Diffraktionslinse 75. Wie zu sehen ist, weisen die einzelnen Zonen 76 diffraktive Subzonen (76',76",76''') auf, die optischen Weglängendifferenzen der Lichtstrahlen durch die Subzonen 76', 76", 76''' bestehen dabei in bekannter Weise festen Beziehungen. Zwischen den optischen Weglängen der Lichtstrahlen durch die verschiedenen Zonen 76 gelten hingegen erfindungsgemäß die Bedingungen der Kohärenzlängenkorrektur. Eine solche Kohärenzlängenkorrektur ist dann vorteilhaft, wenn z.B. die Tiefenschärfe der beiden Brechkräfte einer Diffraktionslinse erhöht werden soll, d.h. wenn die Intensitätsverteilungen in den beiden Brechkräften verbreitert werden sollen. Weiters ist es aus fertigungstechnischen Gründen ggf. schwierig, die erforderlichen festen Phasenbeziehungen zwischen weit auseinanderliegenden diffraktiven Zonen zu verwirklichen; Fehler bei der Oberflächengestaltung von größenordnungsmäßig 0,1 Mikrometer zwischen inneren und außen liegenden Zonen können dann zu unerwünschten destruktiven Interferenzen von Licht aus solchen "verstimmten" Zonen führen. Demgegenüber ist es vergleichsweise einfacher, den erforderlichen Genauigkeitsgrad für benachbarte Subzonen 76, 76', 76" zu erreichen. Deshalb kann es zielführend sein, nur jeweils einige diffraktive Subzonen 76', 76", 76''' mit der erforderlichen Genauigkeit fertigen zu müssen und die aus den Subzonen 76', 76", 76''' bestehenden diffraktiven Zonen 76 jeweils interferenzmäßig zu entkoppeln. Mit solchen Linsen 76 erhält man dann in den Brechkräften die Summen der Teilintensitäten der einzelnen Zonen und nicht die - bei verstimmten Zonen reduzierten - Vektorsummen der Amplituden.

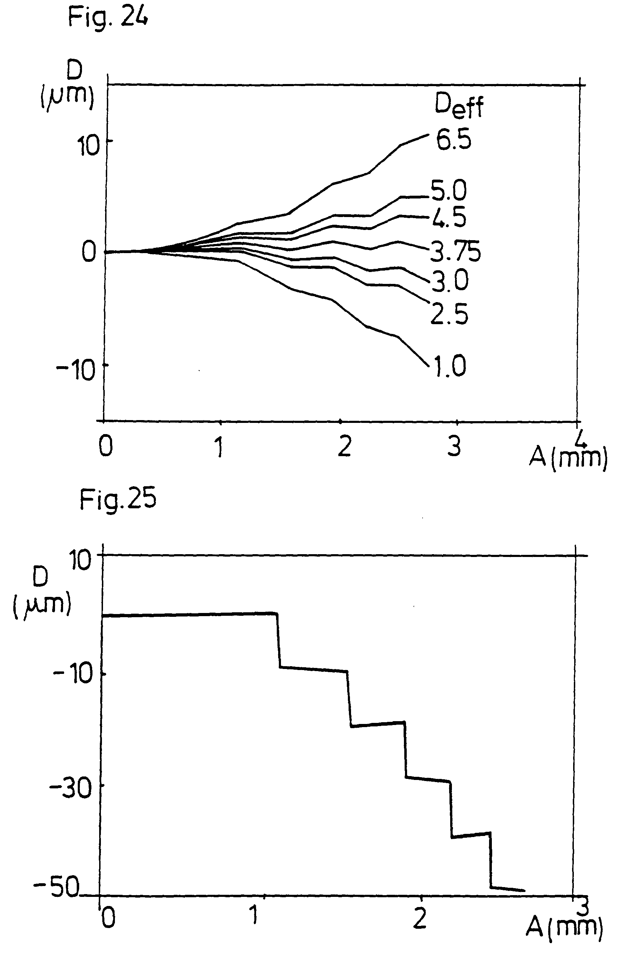

Zur Verdeutlichung und Zusammenfassung der Erfindung werden in Fig. 24 die optischen Weglängendifferenzen D bei einer konventionellen refraktiven bifokalen Zonenlinse (nominelle Brechkräfte 2,5 und 5,0 Dioptrien, welche die Zonen abwechselnd aufweisen) gezeigt; diese Linse ist also nicht kohärenzlängenkorrigert. Fig. 24 zeigt die für verschiedene effektive Brechkräfte $D_{eff}$ gegebenen Weglängenunterschiede für Strahlen in verschiedenen Abständen A von der Linsenmitte. Wie zu sehen ist, haben alle Strahlen durch eine bestimmte Zone, wenn die nominelle Brechkraft dieser Zone der effektiven Brechkraft entspricht, jeweils die gleiche optische Weglänge, wobei die Weglängen bzw. die Mittelwerte dieser Weglängen durch verschiedene dieser Zonen allerdings verschieden sind. Für eine effektive Brechkraft, die den Mittelwert der beiden nominellen Brechkräfte darstellt (im Beispiel 3,75 Dioptrien), sind die Mittelwerte der Weglängen der Strahlen durch alle Zonen allerdings gleich. Das erklärt das beobachtete Auftreten eines Intensitätsmaximums zwischen den beiden nominellen Brechkräften (vgl. Fig. 13b). In Fig. 25 ist zum Vergleich das Ergebnis für eine Ausführungsform einer kohärenzlängenkorrigierten refraktiven Zonenlinse mit den gleichen nominellen Brechkräften bei der effektiven Brechkraft 3,75 Dioptrien gezeigt. Bei dieser Linse befinden sich zwischen den einzelnen Zonen z.B. Stufen, die bewirken, daß die Differenz der optischen Weglängen zwischen zwei durch verschiedene Zonen in unmittelbarer Umgebung der gemeinsamen Zonenbegrenzung gehender Strahlen ca. 10 Mikrometer beträgt. Wie Fig. 25 zu entnehmen ist, kann für Kohärenzlängen unter ca. 10 Mikrometer keine Interferenz von Lichtwellen aus den verschiedenen Zonen stattfinden, was bedeutet, daß es für diese effektive Brechkraft zu einer Summierung der skalaren Intensitäten aus den einzelnen Zonen kommt (vgl. Fig. 13a). Selbstverständlich betragen die Unterschiede der optischen Weglängen von durch zwei benachbarte Zonen gehenden Strahlen auch für andere effektive Brechkräfte bei den hier diskutierten Linsen ca. 10 Mikrometer, zur Charakterisierung der Verhältnisse eignen sich aber die Verhältnisse für die effektive Brechkraft, die dem Mittelwert zweier aneinandergrenzender Zonen verschiedener (oder auch gleicher) nomineller Brechkraft entspricht.

Die gegenständlichen Ausführungen behandeln die Verhältnisse für elektromagnetische Strahlung im sichtbaren Bereich. Selbstverständlich können analoge Überlegungen auch für Vorrichtungen zur Verarbeitung von wellenförmiger Strahlung anderer Art und/oder anderer Wellenlängenbereiche angewendet werden.

Die in den bisherigen Ausführungen dargelegten Überlegungen zur Kohärenzlängenkorrektur von Zonenlinsen können natürlich auch auf die Verhältnisse von Spiegeln bzw. Zonenspiegeln für sichtbare elektromagnetische Strahlung oder auch für elektromagnetische Strahlung anderer Wellenlängenbereiche angewendet werden. Die Abbildungsgleichungen von Linsen können in einfacher Weise auf die Abbildungsverhältnisse von Spiegeln übertragen werden, siehe z.B. Bergmann-Schäfer, Lehrbuch der Experimentalphysik, Bd. 3 Optik, Berlin New York 1993, Seite 88. Dadurch ist es für den Fachmann ohne Schwierigkeiten möglich, die obigen Überlegungen und Bedingungen auf die Verhältnisse abbildender Spiegel bzw. Spiegelsysteme anzuwenden. Deshalb sind auch abbildende Spiegelsysteme, bei denen eine Kohärenzlängenkorrektur durchgeführt wird, erfindungsgemäße Vorrichtungen, auch wenn solche nicht gesondert in ausführlicher Weise diskutiert werden.

Es ist, um ein Beispiel zu nennen, bekannt, daß ein Parabolspiegel parallel zur Spiegelachse einfallende elektromagnetische Strahlung in den Brennpunkt fokussiert. Es kann nun erwünscht sein, daß ein Spiegel die einfallende Strahlung in verschiedene Brennpunkte fokussiert. Dieses Ziel kann erreicht werden, wenn sich der Spiegel aus verschiedenen Zonen verschiedener Brennweite zusammensetzt. Werden solche Zonenspiegel derart ausgebildet, daß deren Oberfläche stetig ist, so kann es zu störenden Interferenzen (z.B. destruktive Interferenzen) von Strahlung aus den einzelnen Zonen des Spiegels in den einzelnen Brennpunkten kommen. Werden hingegen die Zonen eines multifokalen Spiegels so ausgebildet, daß sich zwischen benachbarten Zonen Stufen befinden, die bewirken, daß die von einzelnen Zonen in die Brennpunkte gelangenden Wellen Weglängenunterschiede von mindestens der Kohärenzlänge der einfallenden Strahlung aufweisen, so werden solche gegebenenfalls störenden Interferenzerscheinungen unterdrückt.

Wird Strahlung verwendet, für die gewisse Materialien durchlässig sind, das heißt daß ein Brechungsindex für solche Materialien angegeben werden kann, so können Spiegelzonen - analog den obigen Überlegungen - auch mit Materialien verschiedener Brechungsindizes belegt werden, um eine entsprechende Kohärenzlängenkorrektur zu erreichen.

**Patentansprüche**

1. Zonenlinse mit mehreren Zonen, welche durch physikalische Eigenschaften unterscheidbare Bereiche der Linse darstellen, wobei sich die physikalischen Eigenschaften zwischen den einzelnen Zonen in einem verhältnismäßig kleinen Bereich sprungartig ändern, und von denen mindestens zwei benachbarte Zonen derart ausgebildet sind, daß jeweils die Differenzen der optischen Weglängen zwischen einem Objektpunkt und einem Bildpunkt von Lichtstrahlen, die durch diese zwei benachbarten Zonen der Linse verlaufen, mindestens 1 µm betragen, wobei das verwendete Licht sichtbares Licht ist, dadurch gekennzeichnet, daß die Zonenlinse eine zentrale kreisförmige Zone und eine Mehrzahl von kreisringförmigen Zonen aufweist, die konzentrisch um die zentrale Zone angeordnet sind, wobei zur Erzielung einer Halbwertsbreite der effektiven Brechkraftverteilung $\Delta P$ von mindestens einer Dioptrie die in mm$^2$ gemessene Zonenfläche für jede der Zonen maximal einen Wert von 0,0056 . $\lambda$ annimmt, wobei $\lambda$ die in Nanometer gemessene mittlere Wellenlänge des verwendeten sichtbaren Lichts ist.

2. Zonenlinse nach Anspruch 1, dadurch gekennzeichnet, daß die optischen Weglängendifferenzen aller Lichtstrahlen, die durch jeweils zwei verschiedene Zonen der Linse verlaufen, mindestens 1 um betragen.

3. Zonenlinse nach einem der Ansprüche 1 oder 2, dadurch gekennzeichnet, daß benachbarte Zonen der Linse eine unterschiedliche Dicke des Linsenmaterials aufweisen, wobei zwischen den Zonen Stufen vorgesehen sind.

4. Zonenlinse nach Anspruch 3, dadurch gekennzeichnet, daß die Stufenhöhe gemessen in Mikrometern zwischen benachbarten Zonen der Linse mindestens 5/ | ($n_c$-$n_i$) | beträgt, wobei $n_c$ den Brechungsindex des Linsenmaterials und $n_i$ den Brechungsindex des an die Linse angrenzenden Mediums bezeichnen.

5. Zonenlinse nach Anspruch 4, dadurch gekennzeichnet, daß die Stufenhöhe zwischen benachbarten Zonen der Linse mindestens drei Mikrometer, vorzugsweise mindestens 10 Mikrometer beträgt.

6. Zonenlinse nach einem der Ansprüche 1 bis 5, dadurch gekennzeichnet, daß benachbarte Zonen der Linse Materialien mit unterschiedlichen Brechungsindizes aufweisen.

7. Zonenlinse nach einem der Ansprüche 1 oder 2, dadurch gekennzeichnet, daß die Linse zumindest zwei Schichten aus unterschiedlichen Materialien aufweist, wobei zumindest eine zwischen zwei solchen Schichten liegende Grenzfläche zwischen benachbarten Zonen der Linse Stufen aufweist.

8. Zonenlinse nach Anspruch 7, dadurch gekennzeichnet, daß die Stufenhöhe gemessen in Mikrometern zwischen benachbarten Zonen der Linse mindestens $5/|(n_1-n_2)|$ beträgt, wobei $n_1$ und $n_2$ die Brechungsindizes der Materialien der beiden Schichten bezeichnen.

9. Zonenlinse nach einem der Ansprüche 1 bis 8, dadurch gekennzeichnet, daß die seitlichen Flächen von Stufen zwischen den Zonen lichtabsorbierend ausgebildet sind.

10. Zonenlinse nach einem der Ansprüche 1 bis 9, dadurch gekennzeichnet, daß die Flächeninhalte der Zonen im wesentlichen gleich groß sind.

11. Zonenlinse nach einem der Ansprüche 1 bis 10, dadurch gekennzeichnet, daß die nominalen Brechkräfte der einzelnen Zonen gleich sind, wobei die nominalen Brechkräfte der Zonen gleich Null sind.

12. Zonenlinse nach einem der Ansprüche 1 bis 11, dadurch gekennzeichnet, daß mindestens zwei Typen von Zonen vorgesehen sind, wobei alle Zonen eines Typs gleiche nominale Brechkräfte aufweisen und Zonen verschiedener Typen aber unterschiedliche nominale Brechkräfte aufweisen.

13. Zonenlinse nach Anspruch 12, dadurch gekennzeichnet, daß jeweils Zonen unterschiedlicher Typen unmittelbar benachbart sind.

14. Zonenlinse nach Anspruch 13, dadurch gekennzeichnet, daß für einen Typ von Zonen die optischen Weglängen aller Lichtstrahlen vom Objektpunkt durch eine der Zonen dieses Typs zum zu diesem Typ gehörenden konjugierten Bildpunkt gleich sind.

15. Zonenlinse nach Anspruch 13, dadurch gekennzeichnet, daß die optischen Weglängendifferenzen jeweils zweier durch verschiedene Typen von Zonen der Linse von einem Objektpunkt zu einem Bildpunkt, der vorzugsweise einem zum Objektpunkt gehörenden konjugierten Bildpunkt eines der Zonentypen der Linse entspricht, verlaufenden Lichtstrahlen mindestens 1 µm betragen.

16. Zonenlinse nach einem der Ansprüche 1 bis 15, dadurch gekennzeichnet, daß das optische Medium der Linse ein doppelbrechendes optisches Material ist.

17. Zonenlinse nach einem der Ansprüche 1 bis 16, dadurch gekennzeichnet, daß zumindest ein Teil der Zonen diffraktive Subzonen aufweist, wobei diese Zonen diffraktive Brechkräfte aufweisen.

18. Zonenlinse nach einem der Ansprüche 1 bis 17, dadurch gekennzeichnet, daß zur Erzielung einer Halbwertsbreite der effektiven Brechkraftverteilung ΔP von mindestens zwei Dioptrien die in $mm^2$ gemessene Zonenfläche für jede der Zonen maximal einen Wert von $0,0028 \cdot \lambda$ annimmt, wobei λ die in Nanometer gemessene mittlere Wellenlänge des verwendeten Lichts ist.

19. Zonenlinse nach einem der Ansprüche 1 bis 17, dadurch gekennzeichnet, daß zur Erzielung einer Halbwertsbreite der effektiven Brechkraftverteilung ΔP von mindestens vier Dioptrien die in $mm^2$ gemessene Zonenfläche für jede der Zonen maximal einen Wert von $0,0014 \cdot \lambda$ annimmt, wobei λ die in Nanometer gemessene mittlere Wellenlänge des verwendeten Lichts ist.

20. Verwendung einer Zonenlinse nach einem der Ansprüche 1 bis 19 als ophthalmische Linse.

21. Verwendung einer Zonenlinse nach einem der Ansprüche 1 bis 19 als optisches Instrument zur achsunabhängigen Korrektur des Astigmatismus, insbesondere des irregulären Astigmatismus.

22. Verwendung einer Zonenlinse nach einem der Ansprüche 1 bis 19 als Intracorneallinse.

23. Verwendung einer Zonenlinse nach einem der Ansprüche 1 bis 19 als Kontaktlinse.

24. Verwendung einer Zonenlinse nach einem der Ansprüche 1 bis 19 als Brillenglas.

25. Verwendung einer Zonenlinse nach einem der Ansprüche 1 bis 19 als Intraokularlinse.

26. Verwendung einer Zonenlinse nach einem der Ansprüche 1 bis 19 in einem optischen System, vorzugsweise Fernrohr oder Mikroskop.

27. Zonenspiegel mit mehreren Zonen, welche durch physikalische Eigenschaften unterscheidbare Bereiche der Linse darstellen, wobei sich die physikalischen Eigenschaften zwischen den einzelnen Zonen in einem verhältnismäßig kleinen Bereich sprungartig ändern, und von denen mindestens zwei benachbarte Zonen derart ausgebildet sind, daß jeweils die Differenzen der optischen Weglängen zwischen einem Objektpunkt und einem Bildpunkt von Lichtstrahlen, die auf diese zwei benachbarten Zonen der Linse auftreffen, mindestens 1 µm betragen, wobei das verwendete Licht sichtbares Licht ist, dadurch gekennzeichnet, daß der Zonenspiegel eine zentrale kreisförmige Zone und eine Mehrzahl von kreisringförmigen Zonen aufweist, die konzentrisch um die zentrale Zone angeordnet sind, wobei zur Erzielung einer Halbwertsbreite der effektiven Brechkraftverteilung $\Delta P$ von mindestens einer Dioptrie die in mm$^2$ gemessene Zonenfläche für jede der Zonen maximal einen Wert von 0,0056 . $\lambda$ annimmt, wobei $\lambda$ die in Nanometer gemessene mittlere Wellenlänge des verwendeten sichtbaren Lichts ist.

**28.** Zonenspiegel nach Anspruch 27, dadurch gekennzeichnet, daß zur Erzielung einer Halbwertsbreite der effektiven Brechkraftverteilung $\Delta P$ von mindestens zwei Dioptrien die in mm$^2$ gemessene Zonenfläche für jede der Zonen maximal einen Wert von 0,0028. $\lambda$ annimmt, wobei $\lambda$ die in Nanometer gemessene mittlere Wellenlänge der verwendeten Strahlung ist.

**29.** Zonenlinse mit mehreren Zonen, welche durch physikalische Eigenschaften unterscheidbare Bereiche der Linse darstellen, wobei sich die physikalischen Eigenschaften zwischen den einzelnen Zonen in einem verhältnismäßig kleinen Bereich sprungartig ändern, und von denen mindestens zwei benachbarte Zonen derart ausgebildet sind, daß jeweils die Differenzen der optischen Weglängen zwischen einem Objektpunkt und einem Bildpunkt von Lichtstrahlen, die durch diese zwei benachbarten Zonen der Linse verlaufen, mindestens 1 $\mu$m betragen, wobei das verwendete Licht sichtbares Licht ist, dadurch gekennzeichnet, daß mindestens zwei Typen von Zonen vorgesehen sind, wobei alle Zonen eines Typs gleiche nominale Brechkräfte aufweisen und Zonen verschiedener Typen aber unterschiedliche nominale Brechkräfte aufweisen, und daß für einen Typ von Zonen die optischen Weglängen aller Lichtstrahlen vom Objektpunkt durch eine der Zonen dieses Typs zum zu diesem Typ gehörenden konjugierten Bildpunkt gleich sind.

## Claims

**1.** Zoned lens with a plurality of zones, which represent, by means of physical properties, discernible areas of the lens, wherein the physical properties change abruptly between the individual zones over a relatively small area, and at least two adjacent zones of said lens are arranged such that the differences in the optical path lengths between an object point and an image point, of light rays passing through these two adjacent zones of the lens, are at least 1$\mu$m, wherein the light used is visible light, characterised in that the zoned lens has a central circular zone and a plurality of circular zones which are arranged concentrically around the central zone, wherein in order to obtain a half-value width of the effective power distribution $\Delta P$ of at least one dioptre, the zone area of each of the zones, measured in mm$^2$, assumes a maximum value of 0.0056 . $\lambda$, wherein $\lambda$ is the average wavelength of the visible light used, measured in nanometres.

**2.** Zoned lens according to claim 1, characterised in that the optical path length differences of all light rays which pass through two different zones of the lens are at least 1$\mu$m.

**3.** Zoned lens according to one of claims 1 or 2, characterised in that adjacent zones of the lens have a different thickness of lens material, wherein steps are provided between the zones.

**4.** Zoned lens according to claim 3, characterised in that the step height, measured in micrometres, between adjacent zones of the lens is at least $5/| (n_c - n_i)|$, wherein $n_c$ is the refractive index of the lens material, and $n_i$ is the refractive index of the medium adjacent to the lens.

**5.** Zoned lens according to claim 4, characterised in that the step height between the adjacent zones of the lens is at least three micrometres, preferably at least 10 micrometres.

**6.** Zoned lens according to one of claims 1 to 5, characterised in that adjacent zones of the lens have materials with different refractive indices.

**7.** Zoned lens according to one of claims 1 or 2, characterised in that the lens has at least two layers of different materials, wherein at least one interface between adjacent zones of the lens, located between two such layers, has steps.

**8.** Zoned lens according to claim 7, characterised in that the step height, measured in micrometres, between adjacent zones of the lens, is at least $5/| (n_1 - n_2)|$, wherein $n_1$ and $n_2$ are the refractive indices of the materials of the two layers.

**9.** Zoned lens according to one of claims 1 to 8, characterised in that the lateral surfaces of steps between the zones are arranged to be light-absorbent.

**10.** Zoned lens according to one of claims 1 to 9, characterised in that the areas of the zones are of substantially equal sizes.

**11.** Zoned lens according to one of claims 1 to 10, characterised in that nominal powers of the individual zones are equal, wherein the nominal powers of the zones equal zero.

12. Zoned lens according to one of claims 1 to 11, characterised in that at least two types of zones are provided, wherein all the zones of one type have the same nominal power, and zones of different types have different nominal powers.

13. Zoned lens according to claim 12, characterised in that zones of different types are directly adjacent.

14. Zoned lens according to claim 13, characterised in that for one type of zones, the optical path lengths of all light rays from the object point through one of the zones of this type to the conjugated image point belonging to this type are equal.

15. Zoned lens according to claim 13, characterised in that the differences in the optical path lengths of two light rays passing through different types of zones of the lens from an object point to an image point, which preferably corresponds to a conjugated image point belonging to the object point of one of the types of zones of the lens, are at least 1μm:

16. Zoned lens according to one of claims 1 to 15, characterised in that the optical medium of the lens is a birefringent optical material.

17. Zoned lens according to one of claims 1 to 16, characterised in that at least a part of the zones have different sub-zones, wherein these zones have different diffractive powers.

18. Zoned lens according to one of claims 1 to 17, characterised in that in order to obtain a half-width value of the effective power distribution $\Delta P$ of at least two dioptres, the zone areas for each of the zones, measured in mm$^2$, assumes a maximum value of $0.0028 \cdot \lambda$, wherein $\lambda$ is the average wavelength of the light used, measured in nanometres.

19. Zoned lens according to one of claims 1 to 17, characterised in that in order to obtain a half-width value of the effective power distribution $\Delta P$ of at least four dioptres, the zone areas for each zone, measured in mm$^2$, assumes a maximum value of $0.0014 \cdot \lambda$, wherein $\lambda$ is the average wavelength of the light used, measured in nanometres.

20. Use of a zoned lens according to one of claims 1 to 19 as an ophthalmic lens.

21. Use of zoned lens according to one of claims 1 to 19 as an optical instrument for correction of astigmatism, regardless of the axis, in particular of irregular astigmatism.

22. Use of a zoned lens according to one of claims 1 to 19 as an intra-corneal lens.

23. Use of a zoned lens according to one of claims 1 to 19 as a contact lens.

24. Use of a zoned lens according to one of claims 1 to 19 as a spectacle lens.

25. Use of a zoned lens according to one of claims 1 to 19 as an intra-ocular lens.

26. Use of a zoned lens according to one of claims 1 to 19 in an optical system, preferably a telescope or microscope.

27. Zoned mirror with a plurality of zones, which represent, by means of physical properties, discernible areas of the lens, wherein the physical properties change abruptly between the individual zones over a relatively small area, and at least two adjacent zones of said lens are arranged such that the differences in the optical path lengths between an object point and an image point of light rays which are incident upon these two adjacent zones of the lens are at least 1μm wherein the light used is visible light, characterised in that the zoned mirror has a central circular zone and a plurality of circular zones which are arranged concentrically around the central zone, wherein in order to obtain a half-value width of the effective power distribution $\Delta P$ of at least one dioptre, the zone area of each of the zones, measured in mm$^2$, assumes a maximum value of $0.0056 \cdot \lambda$, wherein $\lambda$ is the average wavelength of the visible light used, measured in nanometres.

28. Zoned mirror according to claim 27, characterised in that in order to obtain a half-width value of the effective power distribution $\Delta P$ of at least two dioptres, the zone area of each of the zones, measured in mm$^2$, assumes a maximum value of $0.0028 \cdot \lambda$, wherein X is the average wavelength of the radiation used, measured in nanometres.

29. Zoned lens with a plurality of zones, which represent, by means of physical properties, discernible areas of the lens, wherein the physical properties change abruptly between the individual zones over a relatively small area, and at least two adjacent zones of said lens are arranged such that the differences in the optical path lengths between an object point and an image point, of light rays passing through these two adjacent zones of the lens, are at least 1μm, wherein the light used is visible light, characterised in that at least two types of zones are provided, wherein all the zones of one type have the same nominal powers, and zones of different types have different nominal powers, and in that for a type of zones, the optical path lengths of all light rays from the object point through one of the zones of this type to the conjugated image point belonging to this type are equal.

## Revendications

1. Lentille zonée comportant plusieurs zones qui constituent des régions de la lentille pouvant être distinguées par des propriétés physiques, les propriétés physiques des différentes zones variant brusquement dans une plage relativement restreinte, et parmi lesquelles au moins deux zones voisines sont conformées de telle façon que les différences des chemins optiques entre un point objet et un point image de rayons lumineux qui traversent ces deux zones voisines de la lentille, représentent au moins 1 μm, la lumière utilisée étant une lumière visible, caractérisée en ce que la lentille zonée présente une zone centrale circulaire et une pluralité de zones en anneau de cercle qui sont disposées de manière concentrique autour de la zone centrale, la surface, mesurée en mm$^2$, de chacune des zones ayant une valeur maximale de 0,0056.λ pour obtenir une largeur de bande effective de la répartition effective du pouvoir réfringent ΔP d'au moins une dioptrie, λ étant la longueur d'onde moyenne, mesurée en nanomètre, de la lumière visible utilisée.

2. Lentille zonée suivant la revendication 1, caractérisée en ce que les différences de chemin optique de tous les rayons lumineux qui traversent respectivement deux zones différentes de la lentille représentent au moins 1 μm.

3. Lentille zonée suivant l'une des revendications 1 ou 2, caractérisée en ce que des zones voisines de la lentille présentent une épaisseur de matériau différente, des échelons étant prévus entre les zones.

4. Lentille zonée suivant la revendication 3, caractérisée en ce que la hauteur d'échelon, mesurée en micromètre, entre des zones voisines de la lentille est d'au moins 5/ | ($n_c$-$n_j$) |, $n_c$ étant l'indice de réfraction du matériau de la lentille et $n_j$ l'indice de réfraction du milieu adjacent à la lentille.

5. Lentille zonée suivant la revendication 4, caractérisée en ce que la hauteur d'échelon entre des zones voisines de la lentille représente au moins 3 micromètres, de préférence au moins 10 micromètres.

6. Lentille zonée suivant l'une des revendications 1 à 5, caractérisée en ce que des zones voisines de la lentille présentent des matériaux à indice de réfraction différent.

7. Lentille zonée suivant l'une des revendications 1 ou 2, caractérisée en ce que la lentille présente au moins deux couches en des matériaux différents, au moins une surface limite située entre deux couches de ce type entre des zones voisines de la lentille, comportant des échelons.

8. Lentille zonée suivant la revendication 7, caractérisée en ce que la hauteur d'échelon, mesurée en micromètre, entre des zones voisines de la lentille est d'au moins 5/ | ($n_1$-$n_2$) |, $n_1$ et $n_2$ étant les indices de réfraction des matériaux des deux couches.

9. Lentille zonée suivant l'une des revendications 1 à 8, caractérisée en ce que les surfaces latérales d'échelons entre les zones sont conçues pour absorber la lumière.

10. Lentille zonée suivant l'une des revendications 1 à 9, caractérisée en ce que les superficies des zones sont sensiblement identiques.

11. Lentille zonée suivant l'une des revendications 1 à 10, caractérisée en ce que les pouvoirs réfringents nominaux des différentes zones sont égaux, les pouvoirs réfringents nominaux des zones étant nuls.

12. Lentille zonée suivant l'une des revendications 1 à 11, caractérisée en ce qu'au moins deux types de zones sont prévus, toutes les zones d'un type présentant le même pouvoir réfringent nominal mais des zones de types différents présentant des pouvoirs réfringents nominaux différents.

13. Lentille zonée suivant la revendication 12, caractérisée en ce que des zones de types différents sont directement voisines.

14. Lentille zonée suivant la revendication 13, caractérisée en ce que pour un type de zones, les chemins optiques de tous les rayons lumineux qui vont d'un point objet à un point image conjugué associé à ce type en traversant une des zones de ce type, sont égaux.

15. Lentille zonée suivant la revendication 13, caractérisée en ce que les différences de chemin optique de deux rayons lumineux traversant des types différents de zones de la lentille, entre un point objet et un point image qui correspond de préférence à un point image conjugué associé au point objet de l'un des types de zone de la lentille, représentent au moins 1 μm.

16. Lentille zonée suivant l'une des revendications 1 à 15, caractérisée en ce que le milieu optique de la lentille est un matériau optique biréfringent.

**17.** Lentille zonée suivant l'une des revendications 1 à 16, caractérisée en ce qu'au moins une partie des zones comporte des sous-zones diffractives, ces zones présentant des pouvoirs réfringents diffractifs.

**18.** Lentille zonée suivant l'une des revendications 1 à 17, caractérisée en ce que pour obtenir une largeur de bande effective de la répartition effective du pouvoir réfringent ΔP d'au moins deux dioptries, la surface, mesurée en mm$^2$, de chacune des zones a une valeur maximale de 0,0028.λ, λ étant la longueur d'onde moyenne, mesurée en nanomètre, de la lumière utilisée.

**19.** Lentille zonée suivant l'une des revendications 1 à 17, caractérisée en ce que pour obtenir une largeur de bande effective de la répartition effective du pouvoir réfringent ΔP d'au moins quatre dioptries, la surface, mesurée en mm$^2$, de chacune des zones a une valeur maximale de 0,0014.λ, λ étant la longueur d'onde moyenne, mesurée en nanomètre, de la lumière utilisée.

**20.** Utilisation d'une lentille zonée suivant l'une des revendications 1 à 19 comme lentille ophtalmique.

**21.** Utilisation d'une lentille zonée suivant l'une des revendications 1 à 19 comme instrument optique pour une correction indépendante de l'axe de l'astigmatisme, en particulier de l'astigmatisme irrégulier.

**22.** Utilisation d'une lentille zonée suivant l'une des revendications 1 à 19 comme lentille intracornéenne.

**23.** Utilisation d'une lentille zonée suivant l'une des revendications 1 à 19 comme lentille de contact.

**24.** Utilisation d'une lentille zonée suivant l'une des revendications 1 à 19 comme verre de lunettes.

**25.** Utilisation d'une lentille zonée suivant l'une des revendications 1 à 19 comme lentille intraoculaire.

**26.** Utilisation d'une lentille zonée suivant l'une des revendications 1 à 19 dans un système optique, de préférence une longue-vue ou un microscope.

**27.** Réflecteur zoné comportant plusieurs zones qui constituent des régions de la lentille pouvant être distinguées par des propriétés physiques, les propriétés physiques des différentes zones variant brusquement dans une plage relativement restreinte, et parmi lesquelles au moins deux zones voisines sont conformées de telle façon que les différences des chemins optiques entre un point objet et un point image de rayons lumineux qui rencontrent ces deux zones voisines de la lentille, représentent au moins 1 µm, la lumière utilisée étant une lumière visible, caractérisé en ce que le réflecteur zoné présente une zone centrale circulaire et une pluralité de zones en anneau de cercle qui sont disposées de manière concentrique autour de la zone centrale, la surface, mesurée en mm$^2$, de chacune des zones ayant une valeur maximale de 0,0056.λ pour obtenir une largeur de bande effective de la répartition effective du pouvoir réfringent ΔP d'au moins une dioptrie, λ étant la longueur d'onde moyenne, mesurée en nanomètre, de la lumière visible utilisée.

**28.** Réflecteur zoné suivant la revendication 27, caractérisé en ce que pour obtenir une largeur de bande effective de la répartition effective du pouvoir réfringent ΔP d'au moins deux dioptries, la surface, mesurée en mm$^2$, de chacune des zones a une valeur maximale de 0,0028.λ, λ étant la longueur d'onde moyenne, mesurée en nanomètre, du rayonnement utilisé.

**29.** Lentille zonée comportant plusieurs zones qui constituent des régions de la lentille pouvant être distinguées par des propriétés physiques, les propriétés physiques des différentes zones variant brusquement dans une plage relativement restreinte, et parmi lesquelles au moins deux zones voisines sont conformées de telle façon que les différences des chemins optiques entre un point objet et un point image de rayons lumineux qui traversent ces deux zones voisines de la lentille, représentent au moins 1 µm, la lumière utilisée étant une lumière visible, caractérisée en ce qu'au moins deux types de zones sont prévus, toutes les zones d'un type présentant le même pouvoir réfringent nominal mais des zones de types différents présentant des pouvoirs réfringents nominaux différents, et que, pour un type de zones, les chemins optiques de tous les rayons lumineux qui vont d'un point objet à un point image conjugué associé à ce type en traversant une des zones de ce type, sont égaux.

Fig. 1

Fig. 2

Fig. 3
(Dioptrien )

ΔP

10

W=680 nm
W=560nm

5

W=440 nm

0        1.0        1.5        2.0    A(mm)

Fig. 4
ΔP/λ
0.03
Dioptrien/
nm

0.02

0.01

0        1        2        3        4        5
F(mm²)

Fig. 5

Fig. 6

Fig. 7

Fig. 8a

Fig. 8b

$t_2$

$t_1$   $t_3$   19

20   19

Fig. 9

21   23

22

Fig. 10

24b   28   24a   24   27

25   26

Fig. 11

Fig. 12

Fig. 13a

Fig. 13b

Fig. 14

Fig. 15

EP 0 750 750 B1

Fig.16

45

46

48

47

46

Fig.17  49  50

49  50

51

Fig. 18  52

26

Fig. 19

55

0

56

56$^I$

B$_1$

B$_2$

Fig. 20

61$^I$

d$_u$  d$_g$

60

61

Fig. 21

Fig. 22

Fig. 23

Fig. 24

Fig. 25